# EUROPEAN PATENT APPLICATION

(11) **EP 4 744 509 A1**
(43) Date of publication of application: **20.05.2026**
(21) Application number: 24839705.1
(22) Date of filing: 08.07.2024
(51) Int. Cl.: A23L 27/40, A23B 7/10, A23G 3/36, A23L 2/00, A23L 2/52, A23L 7/13, A23L 7/161, A23L 13/00, A23L 17/00, A23L 23/00, A23L 27/00, A23L 33/16

(54) **TASTE COMPOSITION FOR ENHANCING SALTY TASTE AND SALT-REDUCED SEASONING AND SALT-REDUCED FOODS OR BEVERAGES PRODUCED USING THE SAME**

(30) Priority: 10.07.2023 JP 2023113308
(71) Applicant: The University of Tokyo, Bunkyo-ku, Tokyo 113-8654 (JP); Salt Saver Co., Ltd., Koshigaya-shi, Saitama 343-0023 (JP)
(72) Inventor: YAMASHITA Haruyuki, Koshigaya-shi, Saitama 343-0023 (JP); ASAKURA Tomiko, Tokyo 113-8654 (JP); ABE Keiko, Tokyo 113-8654 (JP)
(74) Representative: Sagittarius IP
(86) International application number: PCT/JP2024/024551
(87) International publication number: WO 2025/013813

(57) **Abstract**

The present invention provides a taste composition for reducing sodium content in foods or beverages without compromising a salty taste, salt-reduced seasoning or salt-reduced foods or beverages produced using the taste composition, and a method for producing the salt-reduced seasoning or salt-reduced foods or beverages.

## Description

### TECHNICAL FIELD

### 1. Technical Field

The invention of the subject application relates to a taste composition for reducing sodium content in foods or beverages without compromising a salty taste, salt-reduced seasoning or salt-reduced foods or beverages produced using the taste composition, and a method for producing the salt-reduced seasoning or salt-reduced foods or beverages.

### BACKGROUND ART

### 2. Background Art

Sodium is an element having an important physiological significance that is present mainly in extracellular fluids in the body and plays a role in adjusting mineral balance inside and outside cells. Sodium not only collaborates with potassium to maintain the water balance or osmotic pressure in the body but also is involved in the acid-base equilibrium, muscular contraction, mediation of neuronal excitation, and absorption and transportation of nutrients in the body. Importantly, sodium also regulates blood pressure by maintaining the amounts of extracellular fluid and circulating blood while retaining water. On the other hand, an excessive sodium intake causes cardiovascular diseases such as hypertension or renal dysfunction due to the increase in the amount of extracellular fluid.

The salty taste is one of five basic tastes of foods and is a taste exhibited by table salt. The salty taste is detected by subpopulations of taste receptor cells in taste buds which are sensory receptors localized in an oral epithelium layer (salty taste receptor cells). It is clarified from molecular cell biological, physiological, and behavioral studies using rodents that the salty taste receptor cells include at least three types of taste receptor cells having different molecular characteristics (Non-patent Literatures 1 and 2). One of them expresses α/β/γ subunit trimer of epithelial sodium channel (ENaC) as a taste receptor and has a low threshold for sodium sensing. This subpopulation of taste receptor cells is referred to as amiloride-sensitive salty taste receptor cells because its activity as a sensor of sodium is inhibited in the presence of a diuretic, amiloride, which is an inhibitor of ENaC. The salty taste information received by the amiloride-sensitive salty taste receptor cells is transmitted from the peripheral nervous system to the central nervous system and is assessed and discriminated as a pleasant taste for mammals to increase appetite (Non-patent Literature 3). On the other hand, other salty taste receptor cells in the taste buds constitute parts of distinct subpopulations of taste receptor cells which are responsible for the detection of bitter taste or sour taste and have a high threshold for sodium chloride sensing (Non-patent Literature 2). The salty taste information received by these cells is transmitted to the central nervous system via a different neuronal circuit from a neuronal circuit originating from amiloride-sensitive salty taste receptor cells. As a result, the taste information is assessed and discriminated as an aversive taste for mammals and elicits avoidance behavior of an animal. The salty taste signals which occur in these cells are not inhibited in the presence of amiloride. Therefore, this heterogeneous subpopulation of taste receptor cells is collectively referred to as amiloride-insensitive salty taste receptor cells. As described above, the taste of table salt is detected by several types of taste bud cells, transmitted via different neuronal circuits originating from different taste receptor cells, and assessed in a different manner. Reflecting the existence of these opposing gustatory pathways, the taste of table salt is recognized as a pleasant taste in a lower concentration while it converts to an aversive taste in a higher concentration. This serves as a safety lock to prevent excessive sodium intake.

In light of our food experiences, it is evident that similar opposing mechanisms exist in the taste perception of a human, but the molecular basis is not the same as that of rodents. Although inhibition of salty taste detection by amiloride is also observed in a human, its contribution is very limited (Non-patent Literatures 4 and 5). Therefore, the main molecular mechanisms of sodium sensing in salty taste receptor cells which initiate the neuronal circuits responsible for positive assessment of the taste of table salt in a human, remain to be elucidated. The present inventors recently clarified a part of the molecular mechanisms of salty taste detection in amiloride-insensitive salty taste receptor cells of rodents for the first time (Non-patent Literature 6). The present inventors focused on the fact that, in rodents, amiloride-insensitive salty taste receptor cells are observed in both fungiform papillae which are gustatory tissues located at the anterior tongue and circumvallate papilla which are located at the posterior tongue while amiloride-sensitive salty taste receptor cells are observed in fungiform papillae but not in circumvallate papilla, and screened genes specifically expressed in circumvallate papilla. As a result, the present inventors found that TMC4 gene is expressed in a subpopulation of taste bud cells localized in circumvallate papilla and is expressed very infrequently in taste bud cells localized in fungiform papillae. Furthermore, the present inventors identified that TMC4 is a novel voltage-gated anion channel that plays a role in enhancing the salty taste signals received in taste receptor cells in the presence of anions such as chloride ions (anion effect ). That is, TMC4-expressing taste receptor cells constitute a subpopulation of amiloride-insensitive salty taste receptor cells. In view of the limited contribution of amiloride-sensitive salty taste component, this may be substantially unique, established, and available finding regarding the molecular basis for salty taste detection in a human.

According to dietary intake standards for Japanese people (2020 edition), the common average daily sodium requirement for males and females aged 18 years old or older calculated from sodium excretion is estimated to be 600 mg (equivalent to 1.5 g of table salt). However, the salt intake of Japanese people actually does not get lower than 1.5 g/day with a normal diet. In light of the guidelines of Japan and foreign countries, less than 6 g/day of salt intake is preferred to prevent and treat hypertension.

The proportion of elderly people is increasing in Japanese society, and the importance of salt intake management is increasing. Elderly people come to prefer flavors with more salt than they were younger because taste sensitivity to salt gets lower with age. Elderly people are exposed to an increased risk of arteriosclerosis. Therefore, the coincidence of cardiovascular diseases due to an excessive salt intake can be life-threatening. On the other hand, simply reducing salt in diet compromises the pleasure of eating and this may result in a significant loss of joy in life.

To address this issue, researchers have developed a method of removing dietary sodium by demineralization using an ion exchange membrane (Patent Literatures 1 and 2) and a salt substitute and salty taste enhancer for reducing the sodium content in foods or beverages without compromising the salty taste.

In general, well-known salt substitutes or salty taste enhancers based on inorganic salts have an unintended taste table salt does not exhibit. For example, potassium chloride, which is the most commonly used salt substitute, exhibits not only the salty taste but also the unique, unpleasant, and metal-like taste which is often called acrid taste and the bitter taste. Therefore, it is required to minimize such unintended tastes in the development of a salt substitute based on inorganic salts. Potassium chloride is also used as a salt substitute for a patient who has hypertension, heart failure, renal failure, or diabetes and thus requires low-sodium diets, but daily intake of potassium chloride may increase the risk of hyperkalemia. In particular, hyperkalemia in a patient with decreased renal function as a complication of these diseases is life-threatening and thus taking potassium chloride as a salt substitute is not recommended for such patients. A salty taste enhancer comprising at least one of potassium chloride, ammonium chloride, calcium chloride, magnesium chloride, and lysine hydrochloride is proposed in Patent Literature 3. However, it is demonstrated that such a salt substitute comprising only chloride salts is not the best solution for an alternative to table salt (Patent Literature 4). A composition enhanced in salty taste which is used so that a less amount of table salt and an amount of encapsulated ammonium salt sufficient to enhance the salty taste are added to foods or beverages is proposed in Patent Literature 5. Non-Patent Literature 7 discloses that salty enhancing peptides purified from yeast extracts are identified and it is elucidated that the peptides bind to TMC4 allosteric sites in *in silico* analysis. However, the manufacture of these salt substitutes or salty taste enhancers takes time and costs because it requires the enzyme processing or atomization of materials and the extraction and purification from natural products. Patent Literature 6 shows that guanidine compounds can be used as a salty taste enhancer. However, although these compounds function as a salty taste enhancer, they are not derived from natural products and have not been examined as a food additive. Therefore, there are many difficulties in adding these compounds to meals. Although various methods for demineralization and salt substitutes or salty taste enhancers for reducing salt have been developed, the taste of salt-reduced foods or beverages produced using them does not satisfy people enough. There remains to be a need for the development of a product sufficient to satisfy patients in medical settings.

Therefore, there remains to be a need for the development of a novel taste composition that overcomes a risk or unpleasant unintended taste associated with potassium chloride as a salt substitute, while eliciting a sufficiently strong salty taste and enabling easy manufacturing.

### CITATION LIST

### PATENT LITERATURE

Patent Literature 1: JP-A-2014-198001
Patent Literature 2: JP-A-2016-154503
Patent Literature 3: WO 2019/039441
Patent Literature 4: JP-A-2017-200478
Patent Literature 5: JP-A-H6-237732
Patent Literature 6: WO 2014/061734

### NON-PATENT LITERATURE

Non-Patent Literature 1: Ohmoto M. et al., Sodium-Taste Cells Require Skn-1a for Generation and Share Molecular Features with Sweet, Umami, and Bitter Taste Cells. eNeuro. 2020;7(6):ENEURO.0385-20.
Non-Patent Literature 2: Oka Y. et al., High salt recruits aversive taste pathways. Nature. 2013;494(7438):472-5.
Non-Patent Literature 3: Chandrashekar J. et al., The cells and peripheral representation of sodium taste in mice. Nature. 2010;464(7286):297-301.
Non-Patent Literature 4: Schiffman SS. et al., Amiloride reduces the taste intensity of Na+ and Li+ salts and sweeteners. Proc Natl Acad Sci U S A. 1983;80(19):6136-40.
Non-Patent Literature 5: Bigiani A., Does ENaC Work as Sodium Taste Receptor in Humans? Nutrients. 2020;12(4):1195.
Non-Patent Literature 6: Kasahara Y. et al., TMC4 is a novel chloride channel involved in high-concentration salt taste sensation. J Physiol Sci. 2021;71(1):23.
Non-Patent Literature 7: Shen DY. et al., Identification of novel saltiness-enhancing peptides from yeast extract and their mechanism of action for transmembrane channel-like 4 (TMC4) protein through experimental and integrated computational modeling. Food Chem. 2022;388:132993.

### SUMMARY OF INVENTION

### 3. Summary of Invention

The invention of the subject application provides a taste composition for enhancing a salty taste of foods or beverages, salt-reduced seasoning or salt-reduced foods or beverages produced using the taste composition, and a method for producing the salt-reduced seasoning or salt-reduced foods or beverages.

### TECHNICAL PROBLEM

Well-known salt substitutes or salty taste enhancers include those produced by combining more than one raw material (JP-A-2017-135996, JP-A-2017-200478, and JP-A-2019-165640). In the formulation of such raw materials, the intensity of a salty taste and unintended taste was optimized by empirically changing the ratio of each component without any guidance. The present inventors have found that the salty taste enhancement ratio of a taste composition based on a salt substitute comprising chloride ions is proportional to a molar ratio of chloride ions/sodium ions in the presence of an anion of an organic acid or inorganic acid except for hydrochloric acid as a salty taste enhancer and have achieved the present invention. By focusing on the molar ratio, the intensity of an anion effect can be systematically adjusted while controlling sodium ion concentration in foods or beverages. As a result, a composition that provides a salty taste intensity comparable to or greater than that of table salt can be efficiently optimized. The present invention provides a taste composition that achieves the enhancement of the salty taste at a low cost and easily by selecting readily available materials that exhibit or enhance a salty taste from a list of food additives as an example and optimizing a composition with the above method.

### SOLUTION TO PROBLEM

The present invention provides a taste composition for enhancing a salty taste of foods or beverages, comprising:
ammonium chloride;
one or more sodium salts of an organic acid and/or one or more sodium salts of an inorganic acid except for hydrochloric acid; and
sodium chloride,
wherein a molar ratio of chloride ions/sodium ions is about 1.30 to about 2.10. In one embodiment, a molar ratio of ammonium chloride/sodium chloride in the taste composition of the invention is about 0.4 to about 6.0. In one embodiment, the taste composition of the invention is solid and comprises about 10 wt% to about 30 wt% of sodium ions. In one embodiment, the taste composition of the invention is solid and is used as an alternative to table salt. In one embodiment, the taste composition of the invention is liquid and comprises about 40 mM to about 3.0 M of sodium ions. In one embodiment, the taste composition of the invention is liquid and has a pH of about 5.5 to about 8.6.

In one embodiment, the present invention provides salt-reduced seasoning comprising the taste composition of the invention in an amount of about 0.5 wt% to about 95 wt% instead of table salt, wherein the molar ratio of chloride ions/sodium ions is about 1.30 to about 2.10. In one embodiment, the salt-reduced seasoning of the invention is liquid or pasty and the molar ratio of chloride ions/sodium ions is about 1.46 to about 2.10. In one embodiment, in the liquid or pasty salt-reduced seasoning, a molar ratio of potassium ions/sodium ions is 0 to about 0.080. In one embodiment, the present invention provides salt-reduced foods or beverages comprising the taste composition of the invention in an amount of about 0.01 wt% to about 50 wt% instead of table salt, wherein the molar ratio of chloride ions/sodium ions is about 1.30 to about 2.10. In one embodiment, the present invention provides a method for producing salt-reduced seasoning, comprising adding the taste composition of the invention to seasoning materials. In one embodiment, the present invention provides a method for producing salt-reduced foods or beverages, comprising adding the taste composition of the invention to food or beverage materials. In one embodiment, the present invention provides a method for enhancing the salty taste of foods or beverages, comprising adding a taste composition for enhancing the salty taste of foods or beverages, comprising: ammonium chloride; one or more sodium salts of an organic acid, and/or one or more sodium salts of an inorganic acid except for hydrochloric acid; and sodium chloride, wherein a molar ratio of chloride ions/sodium ions is about 1.30 to about 2.10 to food or beverage materials. In one embodiment, the present invention provides the use of a taste composition for enhancing the salty taste of foods or beverages, comprising: ammonium chloride; one or more sodium salts of an organic acid, and/or one or more sodium salts of an inorganic acid except for hydrochloric acid; and sodium chloride, wherein a molar ratio of chloride ions/sodium ions is about 1.30 to about 2.10.

In one embodiment, the taste composition of the invention is for a subject having hypertension or prehypertension. In one embodiment, the taste composition of the invention is for a healthy subject.

The present invention provides a taste composition for enhancing a salty taste component of the taste of foods or beverages that is detected by TMC4-expressing taste receptor cells, comprising:
ammonium chloride;
one or more sodium salts of an organic acid and/or one or more sodium salts of an inorganic acid except for hydrochloric acid; and
sodium chloride,
wherein a molar ratio of chloride ions/sodium ions is about 1.30 to about 2.10.

### ADVANTAGEOUS EFFECTS OF INVENTION

The taste composition of the invention exhibits a higher intensity of a salty taste and a lower intensity of an unintended taste than salt-reduced seasonings currently available on the market. Use of the taste composition of the invention may reduce the sodium amount in foods or beverages by 40% to 60% compared to normal foods or beverages produced with only table salt. Therefore, the taste composition of the invention may increase satisfaction in the food experience of a subject under salt restriction. Furthermore, the taste composition of the invention has a significant effect on health management for subjects with hypertension or prehypertension or healthy subjects seeking to prevent such conditions.

### DESCRIPTION OF EMBODIMENTS

### 4. Detailed Description of Invention

The present invention provides a taste composition for reducing the sodium ion content in foods or beverages without compromising a salty taste by mixing a combination of conventional salty tastants so that the anion effect is maximized. It is thought that the anion effect enhances a salty taste component detected by amiloride-insensitive salty taste receptor cells in light of an expression pattern of a voltage-gated anion channel TMC4 which mediates the anion effect in the oral cavity of mammals (see Kasahara Y. et al., TMC4 is a novel chloride channel involved in high-concentration salt taste sensation. J Physiol Sci. 2021;71(1):23.). It is demonstrated from research results with rodents that amiloride-insensitive salty taste receptor cells respond to table salt at a relatively high threshold and activate a neuronal circuit which elicits avoidance behavior in an animal (see Oka Y. et al., High salt recruits aversive taste pathways. Nature. 2013;494(7438):472-5.). The present inventors have achieved the present invention based on a surprising finding that the anion effect enhances a low threshold salty taste component which is pleasant to a human, and thereby provide a taste composition that reduces sodium content by about half without compromising a salty taste.

### 4.1 Definition

The term "taste perception" as used herein refers to one of the five senses that occurs during food intake. Taste perception occurs when tastants in foods are detected by taste receptor cells in taste buds which are distributed in an oral epithelium layer. Taste receptor cells transmit the taste information they receive to gustatory neurons that are peripheral sensory nerves projecting to taste buds. The taste information is further transmitted from gustatory neurons to the central nervous system, finally reaches the gustatory area of the cerebral cortex where it is recognized.

Sweet, bitter, umami, salty, and sour tastes known as the five basic tastes are detected by basically distinct subpopulations of taste receptor cells expressing taste receptors which are each dedicated to the detection of a particular taste (see Yarmolinsky DA. et al., Common sense about taste: from mammals to insects. Cell. 2009;139(2):234-44. and Chandrashekar J. et al., The cells and peripheral representation of sodium taste in mice. Nature. 2010;464(7286):297-301.). Any of taste receptor cells use ATP as a common signal transmitter to transmit the taste information to gustatory neurons (see Finger TE. et al., ATP signaling is crucial for communication from taste buds to gustatory nerves. Science. 2005;310(5753):1495-9., Eddy MC. et al., Double P2X2/P2X3 purinergic receptor knockout mice do not taste NaCl or the artificial sweetener SC45647. Chem Senses. 2009;34(9):789-97. and Kinnamon S. and Finger T. The Role of ATP and Purinergic Receptors in Taste Signaling. Handb Exp Pharmacol. 2022;275:91-107.) Therefore, the labeled-line hypothesis of taste discrimination that the taste information input from different taste receptor cells is transmitted to the gustatory area of the cerebral cortex via separate neuronal circuits is dominant. Indeed, investigators have confirmed that there are neurons in the peripheral and central nervous systems that are dedicated to the transmission or processing of only one taste information (see Fu O. et al., SatB2-Expressing Neurons in the Parabrachial Nucleus Encode Sweet Taste. Cell Rep. 2019;27(6):1650-1656.e4. and Zhang J. et al., Sour Sensing from the Tongue to the Brain. Cell. 2019;179(2):392-402.e15.).

The term "salty taste receptor cells" as used herein refers to a subpopulation of taste bud cells including multiple cell types that detects the taste of sodium chloride. Salty taste receptor cells include amiloride-sensitive salty taste receptor cells and amiloride-insensitive salty taste receptor cells (see Chandrashekar J. et al., The cells and peripheral representation of sodium taste in mice. Nature. 2010;464(7286):297-301. and Oka Y. et al., High salt recruits aversive taste pathways. Nature. 2013;494(7438):472-5.) The term "amiloride-sensitive salty taste receptor cells" as used herein refers to taste receptor cells that express epithelial sodium channel (ENaC) α/β/γ trimer as a taste receptor and transmit the taste information of sodium ion to gustatory neurons. Activity of ENaC α/β/γ trimer is inhibited by amiloride which is a diuretic. Therefore, the presentation of a sodium chloride aqueous solution mixed with amiloride in the oral cavity of mammals results in a partial reduction of the salty taste. In this case, the partially retained salty taste component is detected by "amiloride-insensitive salty taste receptor cells." Amiloride-insensitive salty taste receptor cells respond to sodium chloride at a higher threshold than amiloride-sensitive salty taste receptor cells and are responsible for the detection of high concentrations of sodium chloride in rodents. A taste receptor that triggers primary salty taste signals in amiloride-insensitive salty taste receptor cells has not been identified, but it is assumed to be an ion channel that is responsible for the detection of several cations including sodium ions. Amiloride-sensitive salty taste receptor cells and amiloride-insensitive salty taste receptor cells activate different neuronal circuits-in rodents, the former elicits attractive behavior to sodium chloride aqueous solution while the latter elicits avoidance behavior.

The term "anion effect" as used herein refers to a phenomenon in which a salty taste is enhanced in the presence of several anions including chloride ions. The present inventors have found that the anion effect is mediated by a voltage-gated anion channel TMC4 which is expressed in a subpopulation of amiloride-insensitive salty taste receptor cells (see Kasahara Y. et al., TMC4 is a novel chloride channel involved in high-concentration salt taste sensation. J Physiol Sci. 2021;71(1):23.). TMC4 enhances salty taste signals by shortening the interval between action potentials occurred in TMC4-expressing taste receptor cells that are depolarized by primary signals triggered by unidentified salty taste receptor via the influx of chloride ions into the cells.

The term "table salt" as used herein refers to seasoning for providing foods or beverages with a salty taste that contains sodium chloride as a primary ingredient. Table salt includes sea salt, rock salt, and lake salt, each of which comes from different sources. In Japan, where land-based salt resources including rock salt and lake salt are scarce, sea salt is mainly produced by concentrating sodium chloride in seawater using membrane dialysis and crystallizing it by boiling it down.

The term "taste composition" as used herein refers to a composition that improves the food experience of a subject by imparting any one or more of the five basic tastes comprising sweet, bitter, umami, salty, and sour tastes to seasoning or foods or beverages or enhancing them.

The term "salt substitute" as used herein refers to a substance that exhibits a taste similar to the salty taste of sodium chloride. Exemplary salt substitutes include potassium chloride and ammonium chloride. The salt substitutes have been conventionally used to reduce sodium intake by replacing a part or all of the table salt added to foods or beverages.

The term "salty taste enhancer" as used herein refers to a substance that does not exhibit a salty taste or has a very weak salty taste by itself but exhibits an effect of enhancing the salty taste in the presence of a small amount of table salt. Therefore, by using a salty taste enhancer, even foods or beverages with a low table salt content can provide the same salty taste as those with a higher table salt content.

The term "molar ratio of chloride ions/sodium ions" as used herein refers to a ratio obtained by dividing the total amount of substance of chloride ions contained in the taste composition, salt-reduced seasoning, or salt-reduced foods or beverages of the invention by the total amount of substance of sodium ions contained in the taste composition, salt-reduced seasoning or salt-reduced foods or beverages. The "molar ratio of chloride ions/sodium ions" in the taste composition, salt-reduced seasoning, or salt-reduced foods or beverages may be about 1.00 to about 2.30, preferably about 1.30 to about 2.10, or further preferably about 1.30 to about 1.90.

The term "molar ratio of ammonium chloride/sodium chloride" as used herein refers to a ratio obtained by dividing the amount of substance of ammonium chloride in the taste composition of the invention by the amount of substance of sodium chloride in the taste composition. The molar ratio of ammonium chloride/sodium chloride in the taste composition may be about 0.2 to about 6.0, preferably about 0.4 to about 2.5, or further preferably about 0.5 to about 1.5.

The term "molar ratio of potassium ions/sodium ions" as used herein refers to a ratio obtained by dividing the amount of substance of potassium ions contained in the liquid or pasty salt-reduced seasoning or liquid or pasty salt-reduced foods or beverages of the invention by the amount of substance of sodium ions contained in the salt-reduced seasoning or salt-reduced foods or beverages. The molar ratio of potassium ions/sodium ions in the liquid or pasty salt-reduced seasoning or liquid or pasty salt-reduced foods or beverages of the invention may be 0 to about 0.100, preferably 0 to about 0.080, or further preferably 0 to about 0.074.

The term "food additives" as used herein refers to chemical substances added to or mixed with food or beverage materials during a manufacturing process of foods or beverages to improve various physical, chemical, and biological properties of foods or beverages. Food additives are classified as: "designated additives" designated by the Minister of Health, Labor and Welfare after confirming their safety and effectiveness; "existing additives" whose items are specified as natural additives that have been used for many years; as well as "natural flavoring agent" and "general food and drink additives."

The term "organic acid" as used herein refers to an organic compound that exhibits acidity. The organic acid includes, but not limited to, carboxylic acid, amino acid, nucleotide, and vitamin or vitamin derivative.

The term "carboxylic acid" as used herein refers to an organic compound in which the carboxyl group is bound to a hydrocarbon chain. The carboxylic acid includes monovalent carboxylic acid and polyvalent carboxylic acid depending on the number of carboxyl groups per molecule. The polyvalent carboxylic acid includes, for example, divalent carboxylic acid and trivalent carboxylic acid.

The monovalent carboxylic acid includes, but not limited to, acetic acid, propionic acid, valeric acid, caproic acid, lactic acid, lauric acid, myristic acid, palmitic acid, margaric acid, oleic acid, stearoyl lactic acid, benzoic acid, glyceric acid, gluconic acid, glucuronic acid, galacturonic acid, iduronic acid, and neuraminic acid. The divalent carboxylic acid includes, but not limited to, oxalic acid, malonic acid, succinic acid, glutaric acid, adipic acid, sebacic acid, maleic acid, fumaric acid, mesaconic acid, malic acid, tartaric acid, mesooxalic acid, oxaloacetic acid, diaminopimelic acid, pamoic acid and norbixin. The trivalent carboxylic acid includes, but not limited to, citric acid, isocitric acid, aconitic acid, and oxalosuccinic acid.

The term "amino acid" as used herein refers to a compound having carboxyl and amino groups. Unless otherwise indicated, the types of the amino acid are not particularly limited. The amino acid may be D-form, L-form, or racemic form in terms of optical isomerism. Furthermore, the amino acid may be any of α-amino acid, β-amino acid, γ-amino acid, δ-amino acid, ω-amino acid, or the like in terms of the relative position of the carboxylic group and amino group. The amino acid may be preferably a standard amino acid including glycine, alanine, valine, leucine, isoleucine, methionine, proline, phenylalanine, tryptophan, serine, threonine, tyrosine, cysteine, asparagine, glutamine, aspartic acid, glutamic acid, lysine, arginine, and histidine. The amino acid also comprises an amino acid derivative including 4-hydroxyproline, hydroxylysine, 3-methylhistidine, norvaline, β-alanine, γ-aminobutyric acid, citrulline, homocysteine, homoserine, ornithine, and methionine sulfone.

The term "nucleobase" as used herein refers to heterocyclic compounds of purine derivatives and pyrimidine derivatives which form a pair through hydrogen bonds, including a naturally occurring nucleobase and a modified nucleobase. The term "naturally occurring nucleobase" as used herein refers to adenine (A), thymine (T), guanine (G), cytosine (C), uracil (U), and inosine (I). The term "modified nucleobase" as used herein is a heterocyclic compound that can form a pair with at least one naturally occurring nucleobase. The term "nucleoside" as used herein refers to a compound with a nucleobase attached to the 1' position of a pentose. The term "nucleotide" as used herein refers to a compound with phosphate groups linked to the 5' position of a pentose moiety of a nucleoside. The nucleotide includes, but not limited to, 5'-adenylic acid, 5'-thymidylic acid, 5'-guanylic acid, 5'-cytidylic acid, 5'-uridylic acid, and 5'-inosinic acid.

The term "vitamin" as used herein refers to a nutrient that must be taken from diets because it cannot be synthesized in sufficient amounts in a human body. The vitamin is a small molecule organic compound having various chemical structures. The vitamins are classified as either water-soluble or fat-soluble vitamins. The water-soluble vitamins easily dissolve in water and include, but not limited to, vitamin B1 (thiamine), vitamin B2 (riboflavin), vitamin B3 (niacin), vitamin B5 (pantothenic acid), vitamin B6 (pyridoxine), vitamin B8 (biotin), vitamin B9 (folic acid), vitamin B12 (cobalamin) and vitamin C (L-ascorbic acid). The fat-soluble vitamins are absorbed from intestinal tract with the aid of lipids and include, but not limited to, vitamin A (retinol, retinal and retinoic acid), vitamin D (vitamin D2 of plant origin (ergocalciferol), vitamin D3 of animal origin (cholecalciferol)), vitamin E (tocopherols and tocotrienols) and vitamin K (vitamin K1 of plant origin (phylloquinone) and vitamin K2 of animal or bacterial origin (menaquinone)). The term "vitamin derivative" as used herein refers to any metabolites, degraded products, ester compounds, and other chemical reaction products derived from a given vitamin. The vitamin derivatives include, but not limited to, dihydroascorbic acid and erythorbic acid.

The term "sodium salt of an organic acid" as used herein refers to a substance in which an organic acid forms a salt with sodium ions. The sodium salt of the organic acid includes sodium salts of carboxylic acid, amino acid, nucleotide, and vitamin or vitamin derivative. When the organic acid comprises a polyvalent anion, one or more countercations may be sodium ions, and not all countercations need to be sodium ions. In this case, the polyvalent anion may comprise a carboxyl or hydroxyl group with an undissociated proton.

The sodium salt of a monovalent carboxylic acid may be, but not limited to, preferably sodium acetate, sodium propionate, sodium lactate, sodium oleate, sodium stearoyl lactate, sodium benzoate, or sodium gluconate. The sodium salt of a divalent carboxylic acid may be, but not limited to, preferably monosodium succinate, disodium succinate, monosodium fumarate, sodium DL-malate, sodium L-tartrate, sodium DL-tartrate, or sodium norbixin. The sodium salt of a trivalent carboxylic acid may be, but not limited to, preferably trisodium citrate. The sodium salt of an amino acid may be, but not limited to, preferably sodium L-aspartate or sodium L-glutamate. The sodium salt of a nucleotide may be, but not limited to, preferably disodium 5'-adenylate, disodium 5'-guanylate, disodium 5'-cytidylate, disodium 5'-uridylate or disodium 5'-inosinate. The sodium salt of a vitamin or vitamin derivative may be, but not limited to, preferably sodium pantothenate, sodium L-ascorbate, or sodium erythorbate.

The term "inorganic acid" as used herein refers to an inorganic compound that exhibits acidity. The inorganic acid includes phosphorus-containing inorganic acid, carbonic acid, sulfur-containing inorganic acid, nitrogen-containing inorganic acid, and selenium-containing inorganic acid. The term "phosphorus-containing inorganic acid" as used herein refers to an oxoacid containing phosphorus or an inorganic polymer compound in which an oxoacid containing phosphorus has polymerized. The phosphorus-containing inorganic acid includes, but not limited to, phosphoric acid, pyrophosphoric acid, metaphosphoric acid, and polyphosphoric acid. The term "carbonic acid" as used herein refers to an oxoacid having one carbon in the center. The term "sulfur-containing inorganic acid" as used herein refers to an oxoacid containing sulfur. The sulfur-containing inorganic acid includes, but not limited to, sulfuric acid, sulfurous acid, and pyrosulfurous acid. The term "nitrogen-containing inorganic acid" as used herein refers to an oxoacid containing nitrogen. The nitrogen-containing inorganic acid includes, but not limited to, nitric acid and nitrous acid. The term "selenium-containing inorganic acid" as used herein refers to an oxoacid containing selenium. The selenium-containing inorganic acid includes, but not limited to, selenious acid. The term "oxoacid" as used herein refers to an acid in which hydroxyl and oxo groups are attached to the same atom and an acidic proton is located at the hydroxyl group. In a preferred embodiment, the inorganic acid is phosphorus-containing inorganic acid. In a preferred embodiment, the phosphorus-containing inorganic acid is phosphoric acid. In a preferred embodiment, the inorganic acid is phosphoric acid.

The term "sodium salt of an inorganic acid" as used herein refers to a substance in which an inorganic acid forms a salt with sodium ions. When the inorganic acid comprises a polyvalent anion, one or more countercations may be sodium ions, and not all countercations need to be sodium ions. In this case, the polyvalent anion may comprise a hydroxyl group with an undissociated proton. The sodium salt of the inorganic acid includes a sodium salt of phosphorus-containing inorganic acid, carbonic acid, sulfur-containing inorganic acid, nitrogen-containing inorganic acid, and selenium-containing inorganic acid. The sodium salt of an inorganic acid may be, but not limited to, preferably trisodium phosphate, disodium hydrogen phosphate, sodium dihydrogen phosphate, tetrasodium pyrophosphate, disodium dihydrogen pyrophosphate, sodium metaphosphate, sodium polyphosphate, sodium carbonate, sodium hydrogen carbonate, sodium sulfate, sodium sulfite, sodium pyrosulfite, sodium nitrate, sodium nitrite, or sodium selenite. In a preferred embodiment, the sodium salt of the inorganic acid is a sodium salt of a phosphorus-containing inorganic acid. In a preferred embodiment, the sodium salt of the phosphorus-containing inorganic acid is trisodium phosphate, disodium hydrogen phosphate, or sodium dihydrogen phosphate. In a preferred embodiment, the sodium salt of the phosphorus-containing inorganic acid is trisodium phosphate. In a preferred embodiment, the sodium salt of the inorganic acid is trisodium phosphate, disodium hydrogen phosphate, or sodium dihydrogen phosphate. In a preferred embodiment, the sodium salt of the inorganic acid is trisodium phosphate.

The sodium salt of an organic acid and the sodium salt of an inorganic acid are preferably designated as food additives.

The term "salt-reduced seasoning" as used herein refers to seasoning that is produced by replacing a part or all of the required amount of table salt with the taste composition of the invention or a well-known salt substitute or salty taste enhancer, and that has a reduced sodium ion content while exhibiting the same intensity of the salty taste as normal seasoning containing table salt. The salt-reduced seasoning may be solid, liquid, or pasty.

The term "salt-reduced foods or beverages" as used herein refers to foods or beverages that are produced either by replacing a part or all of the required amount of table salt with the taste composition of the invention or a well-known salt substitute or salty taste enhancer, or by replacing a part or all of the required amount of seasoning with the salt-reduced seasoning of the invention, and that have a reduced sodium ion content without compromising the salty taste.

The term "cardiovascular disease" as used herein refers to a pathological condition occurring in organs and tissues of the circulatory system including the heart or blood vessels. Cardiovascular disease includes cardiac hypertrophy, cardiomyopathy, myocardial infarction, ischemic heart disease, angina, heart failure including congestive heart failure and acute heart failure, arrhythmia including atrial fibrillation, coronary artery disease, aneurysm, atherosclerosis, arteriosclerosis obliterans, hypertension, and hypertensive retinopathy.

The term "hypertension" as used herein refers to a condition in which, for example, the systolic blood pressure (SBP) is 140 mmHg or greater and/or the diastolic blood pressure (DBP) is 90 mmHg or greater. If left untreated, hypertension can lead to arteriosclerosis due to chronic constriction of blood vessels, which can lead to various complications.

The term "prehypertension" as used herein refers to a condition in which, for example, the SBP is than 120 mmHg or greater and less than 140 mmHg and/or the DBP is 80 mmHg or greater and less than 90 mmHg.

The term "complication of hypertension" as used herein refers to, for example, cerebrovascular disorder including stroke, cardiac disease including ischemic heart disease, cardiac hypertrophy, and heart failure, renal disease, and vascular disease including aneurysm, arteriosclerosis obliterans and hypertensive retinopathy.

The term "renal dysfunction" as used herein refers to a pathological condition that involves a progressive loss of renal function and can be determined, for example, by a decrease in glomerular filtration rate or creatinine clearance, which are indicators of the excretory capacity of the kidney. In a patient with renal dysfunction, insufficiency of excretion of salts and water may result in hypertension. On the other hand, in a patient with hypertension, an increase in stress imposed on the kidney may result in renal dysfunction. Therefore, renal dysfunction and hypertension cause a patient to fall into a negative spiral. The improvement of hypertension may also result in the improvement of renal dysfunction.

The term "reducing salt" or "salt-reduced" as used herein refers to a sodium ion content comprised in seasoning or foods or beverages produced with the taste composition of the invention being reduced compared to sodium ion content in normal seasoning or foods or beverages produced with table salt and exhibiting the same intensity of the salty taste. For example, the taste composition of the invention comprises sodium reduced by about 30% to about 75%, preferably about 35% to about 70%, or further preferably about 40% to about 60% compared to an amount of table salt exhibiting the same salty taste.

The term "exhibiting an enhanced salty taste" as used herein refers to an aqueous solution of the taste composition of the invention inducing a stronger salty taste in the oral cavity of a subject than an aqueous solution of table salt containing the same amount of sodium ions. Furthermore, "exhibiting an enhanced salty taste" refers to seasoning or foods or beverages in which a part or all of table salt has been replaced with the taste composition of the invention inducing a stronger salty taste in the oral cavity of a subject than seasoning or foods or beverages containing the same amount of sodium ions without the taste composition. An aqueous solution of the taste composition exhibiting an enhanced salty taste exhibits the same intensity of the salty taste as an aqueous solution of table salt containing a higher amount of sodium ions, despite containing a smaller amount of sodium ions. Salt-reduced seasoning exhibiting an enhanced salty taste exhibits the same intensity of the salty taste as normal seasoning produced with only table salt and containing a higher amount of sodium ions, despite containing a smaller amount of sodium ions. Salt-reduced foods or beverages exhibiting an enhanced salty taste exhibit the same intensity of the salty taste as normal foods or beverages produced with only table salt and containing a higher amount of sodium ions, despite containing a smaller amount of sodium ions. For example, the aqueous solution of the taste composition exhibiting an enhanced salty taste exhibits an enhanced salty taste by about 40% to about 170%, preferably about 45% to about 150%, or further preferably about 50% to about 110% compared to an aqueous solution of table salt containing the same amount of sodium ions. Likewise, salt-reduced seasoning or salt-reduced foods or beverages exhibiting an enhanced salty taste exhibit an enhanced salty taste by about 40% to about 170%, preferably about 45% to about 150%, or further preferably about 50% to about 110% compared to normal seasoning or foods or beverages produced with only table salt and containing the same amount of sodium ions. The enhanced salty taste may be measured by an *in vitro* test system with a heterologous expression system of TMC4, an *in vivo* test system with genetically modified animals, a taste sensor, or sensory evaluation based on the human perception.

The term "subject" as used herein refers to a mammalian subject. The mammals include, but not limited to, human, non-human primates, dog, cat, hamster, guinea pig, mouse, cow, pig, horse, goat, and sheep. Preferably, the mammalian subject is a human subject.

The term "salty taste enhancement ratio" as used herein is expressed as a ratio obtained by dividing a salty taste intensity of the taste composition of the invention with a given sodium ion concentration by a concentration (w/v%) of an aqueous solution of table salt with the same amount of sodium ions. The salty taste intensity of the taste composition of the invention is scored by trained panelists based on the rating test of analytical sensory evaluation and is expressed as the concentration (w/v%) of an aqueous solution of table salt having the same salty taste intensity. Each panelist memorizes the concentration (w/v%) of an aqueous solution of table salt in 0.1% increments and measures the salty taste intensity of the taste composition based on sensory experience. The salty taste enhancement ratio of the taste composition of the invention is highly correlated with the molar ratio of chloride ions/sodium ions.

The term "analytical sensory evaluation" as used herein is a methodology of sensory evaluation in which properties of a sample (for example, the sweetness of a cake or the hardness of a meat) are assessed or the difference in quality between samples is identified. As the analytical sensory evaluation requires the panelists to have acute sensitivity, the panelists receive specialized training depending on the purpose. As the analytical sensory evaluation makes judgments solely based on the panelists' sensations rather than their personal emotions or preferences, it can make a measurement objectively. The analytical sensory evaluation includes two-point discrimination test, triangle test, paired comparison method, ranking test, rating test, paired comparison test, and Scheffe's paired comparison test.

The term "rating test" as used herein is a method for assessing a certain property (for example, the salty taste intensity) of a given sample using a score based on the panelist's own sensory experience. The salty taste intensity of a sample scored in the rating test is converted to the concentration (w/v%) of an aqueous solution of table salt exhibiting the same salty taste intensity as the sample. The intensity of a taste other than the salty taste (unintended taste) of a sample scored in the rating test may be also graded into several stages from the viewpoint of the presence, tolerability, or taste quality of the unintended taste.

The term "ranking test" as used herein is a method ranking three or more samples on a certain property (for example, the salty taste intensity) based on the panelist's sensory experience.

The term "two-point discrimination test" as used herein is a method in which the panelists compare two samples in terms of a certain property (for example, the salty taste intensity) based on their sensory experience and determine which sample is better.

The term "Pearson's correlation coefficient" as used herein, which is also called Pearson's product-moment correlation coefficient, is one of the correlation coefficients used for examining whether there are any relationships between two observed variables, that is, whether an increase in one variable results in an increase or decrease in the other, or for examining the degree of such a relationship. Pearson's correlation coefficient r is expressed as a numerical value in the range of -1 to 1. If r = 1 or -1, it is demonstrated that there is a linear relationship between the two variables. If r = 1, an increase in one variable causes a proportional increase in the other variable. If r = -1, an increase in one variable causes a proportional decrease in the other variable. When r = 0, the two variables are completely independent. The Pearson's correlation coefficient is calculated under the assumption that two observed variables follow a normal distribution and are randomly sampled from a population. Pearson's correlation coefficient is interpreted by each skilled person based on arbitrary criteria. However, it is accepted by skilled persons that when |r| > 0.9, there is a "very high" correlation between two variables and that when |r| < 0.1, the correlation between two variables is "negligible."

The singular forms "a", "an" and "the" as used herein include plural referents unless the content clearly dictates otherwise, and are used interchangeably with "at least one" and "one or more."

The term "about" or "approximately" as used herein refers to an acceptable error for a numerical value or numerical range of a parameter characterizing the constitution or properties of the present invention, which depends in part on how the value is measured or determined. The term "about" or "approximately" means that a numerical value or numerical range is within 1 or 2 standard deviations of a specified numerical value or numerical range. The term "about" or "approximately" means that a numerical value or numerical range is within 20%, 15%, 10%, 9%, 8%, 7%, 6%, 5%, 4%, 3%, 2%, 1%, 0.5%, or 0.05% of a specified numerical value or numerical range.

"X to y" as used herein means a numerical range including a numerical value x as a lower limit value and a numerical value y as an upper limit value.

The terms "preferred" and "preferably" as used herein refer to embodiments of the invention that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention such as the scope of the claims.

The term "invention" as used herein is intended to comprise all the technical matters described in the claims and detailed description of the invention and all the technical matters which are substantially the same as or equivalent to them and the technical matters obvious for the skilled persons from all the technical matters described in the detailed description of the invention and from all the technical matters which are substantially the same as or equivalent to them.

### 4.2 Taste Composition

In one embodiment of the present invention, provided herein is a taste composition for enhancing the salty taste of foods or beverages, comprising: ammonium chloride; one or more sodium salts of an organic acid and/or one or more sodium salts of an inorganic acid except for hydrochloric acid; and sodium chloride, wherein a molar ratio of chloride ions/sodium ions is about 1.30 to about 2.10. Furthermore, in one embodiment of the present invention, provided herein is a taste composition for enhancing the amiloride-insensitive salty taste component of the taste of foods or beverages, comprising: ammonium chloride; one or more sodium salts of an organic acid and/or one or more sodium salts of an inorganic acid except for hydrochloric acid; and sodium chloride, wherein a molar ratio of chloride ions/sodium ions is about 1.30 to about 2.10. Moreover, in one embodiment of the present invention, provided herein is a taste composition for enhancing the salty taste component of the taste of foods or beverages that is detected by TMC4-expressing taste receptor cells, comprising: ammonium chloride; one or more sodium salts of an organic acid and/or one or more sodium salts of an inorganic acid except for hydrochloric acid; and sodium chloride, wherein a molar ratio of chloride ions/sodium ions is about 1.30 to about 2.10. Ammonium chloride, one or more sodium salts of an organic acid and/or one or more sodium salts of an inorganic acid except for hydrochloric acid, and sodium chloride are all available on the market. Using the taste composition, sodium ion contents in foods or beverages can be reduced without compromising the salty taste by setting the amount of substance of chloride ions that trigger secondary salty taste-enhancing signals in taste receptor cells higher than the amount of substance of sodium ions that trigger primary salty taste signals in taste receptor cells.

In a preliminary study, the present inventors have identified that ammonium chloride is an optimal salt substitute that can achieve the purpose of the present invention. One or more sodium salts of an organic acid and/or one or more sodium salts of an inorganic acid except for hydrochloric acid are added not only for providing a source of sodium but also for enhancing the salty taste of ammonium chloride. The structure of the organic acid or inorganic acid is not particularly limited, and any of monovalent carboxylic acid, divalent carboxylic acid, trivalent carboxylic acid, amino acid, nucleotide, vitamin or vitamin derivative, phosphorus-containing inorganic acid, carbonic acid, sulfur-containing inorganic acid, nitrogen-containing inorganic acid, or selenium-containing inorganic acid play the same role. The unintended taste of the taste composition of the invention can be further reduced by combining more than one organic acid and/or inorganic acid. The mechanism of organic acid anion or inorganic acid anion enhancing the salty taste is unclear. It is speculated that these anions may somehow regulate the salty taste-enhancing signals in TMC4-expressing taste receptor cells via TMC4 activated by chloride ions. Alternatively, some substances, such as aspartate, glutamate, and gluconate anions, may promote the repolarization of taste receptor cells by flowing into cells through the ion channel TMC4, similarly to chloride ion. Future research is required to verify the relationship between the activity of TMC4 and various organic acid anions or inorganic acid anions.

In one embodiment, the taste composition of the invention preferably comprises sodium salts of an organic acid and/or inorganic acid designated as food additives. In one embodiment, the taste composition of the invention comprises one or more sodium salts of an organic acid and/or one or more sodium salts of an inorganic acid except for hydrochloric acid. In one embodiment, the one or more sodium salts of an organic acid and/or one or more sodium salts of an inorganic acid except for hydrochloric acid include, but not limited to, preferably sodium acetate, sodium propionate, sodium lactate, sodium oleate, sodium stearoyl lactate, sodium benzoate, sodium gluconate, monosodium succinate, disodium succinate, monosodium fumarate, sodium DL-malate, sodium L-tartrate, sodium DL-tartrate, sodium norbixin, trisodium citrate, sodium L-aspartate, sodium L-glutamate, disodium 5'-adenylate, disodium 5'-guanylate, disodium 5'-cytidylate, disodium 5'-uridylate, disodium 5'-inosinate, sodium pantothenate, sodium L-ascorbate, sodium erythorbate, trisodium phosphate, disodium hydrogen phosphate, sodium dihydrogen phosphate, tetrasodium pyrophosphate, disodium dihydrogen pyrophosphate, sodium metaphosphate, sodium polyphosphate, sodium carbonate, sodium hydrogen carbonate, sodium sulfate, sodium sulfite, sodium pyrosulfite, sodium nitrate, sodium nitrite, sodium selenite or combination thereof.

In one embodiment, sodium chloride, ammonium chloride, a sodium salt of an organic acid, and a sodium salt of an inorganic acid except for hydrochloric acid that may compose the taste composition of the invention may be preferably food additive grade.

In one embodiment, a molar ratio of chloride ions/sodium ions in the taste composition of the invention is about 1.30 to about 2.30. In one embodiment, the molar ratio of chloride ions/sodium ions in the taste composition of the invention may be preferably about 1.30 to about 1.70, about 1.30 to about 1.80, about 1.30 to about 1.90, about 1.30 to about 2.00, about 1.30 to about 2.10, about 1.30 to about 2.30, about 1.35 to about 1.70, about 1.35 to about 1.80, about 1.35 to about 1.90, about 1.35 to about 2.00, about 1.35 to about 2.10, about 1.35 to about 2.30, about 1.36 to about 1.70, about 1.36 to about 1.80, about 1.36 to about 1.90, about 1.36 to about 2.00, about 1.36 to about 2.10, about 1.36 to about 2.30, about 1.37 to about 1.70, about 1.37 to about 1.80, about 1.37 to about 1.90, about 1.37 to about 2.00, about 1.37 to about 2.10, about 1.37 to about 2.30, about 1.38 to about 1.70, about 1.38 to about 1.80, about 1.38 to about 1.90, about 1.38 to about 2.00, about 1.38 to about 2.10, about 1.38 to about 2.30, about 1.39 to about 1.70, about 1.39 to about 1.80, about 1.39 to about 1.90, about 1.39 to about 2.00, about 1.39 to about 2.10, about 1.39 to about 2.30, about 1.40 to about 1.70, about 1.40 to about 1.80, about 1.40 to about 1.90, about 1.40 to about 2.00, about 1.40 to about 2.10, about 1.40 to about 2.30, about 1.41 to about 1.70, about 1.41 to about 1.80, about 1.41 to about 1.90, about 1.41 to about 2.00, about 1.41 to about 2.10, about 1.41 to about 2.30, about 1.42 to about 1.70, about 1.42 to about 1.80, about 1.42 to about 1.90, about 1.42 to about 2.00, about 1.42 to about 2.10, about 1.42 to about 2.30, about 1.43 to about 1.70, about 1.43 to about 1.80, about 1.43 to about 1.90, about 1.43 to about 2.00, about 1.43 to about 2.10, about 1.43 to about 2.30, about 1.44 to about 1.70, about 1.44 to about 1.80, about 1.44 to about 1.90, about 1.44 to about 2.00, about 1.44 to about 2.10, about 1.44 to about 2.30, about 1.45 to about 1.70, about 1.45 to about 1.80, about 1.45 to about 1.90, about 1.45 to about 2.00, about 1.45 to about 2.10, about 1.45 to about 2.30, about 1.46 to about 1.70, about 1.46 to about 1.80, about 1.46 to about 1.90, about 1.46 to about 2.00, about 1.46 to about 2.10, about 1.46 to about 2.30, about 1.47 to about 1.70, about 1.47 to about 1.80, about 1.47 to about 1.90, about 1.47 to about 2.00, about 1.47 to about 2.10, about 1.47 to about 2.30, about 1.48 to about 1.70, about 1.48 to about 1.80, about 1.48 to about 1.90, about 1.48 to about 2.00, about 1.48 to about 2.10, about 1.48 to about 2.30, about 1.49 to about 1.70, about 1.49 to about 1.80, about 1.49 to about 1.90, about 1.49 to about 2.00, about 1.49 to about 2.10, about 1.49 to about 2.30, about 1.50 to about 1.70, about 1.50 to about 1.80, about 1.50 to about 1.90, about 1.50 to about 2.00, about 1.50 to about 2.10, about 1.50 to about 2.30, about 1.60 to about 1.70, about 1.60 to about 1.80, about 1.60 to about 1.90, about 1.60 to about 2.00, about 1.60 to about 2.10, about 1.70 to about 1.80, about 1.70 to about 1.90, about 1.70 to about 2.00, about 1.70 to about 2.10, about 1.80 to about 1.90, about 1.80 to about 2.00, about 1.80 to about 2.10, about 1.90 to about 2.00, about 1.90 to about 2.10, or about 2.00 to about 2.10. If the molar ratio of chloride ions/sodium ions is low, a sufficient salty taste-enhancing effect cannot be achieved. If the molar ratio of chloride ions/sodium ions is high, the unintended taste gets stronger and the taste composition is unsuitable for application to salt-reduced seasoning or salt-reduced foods or beverages.

In one embodiment, a molar ratio of ammonium chloride/sodium chloride in the taste composition of the invention is about 0.2 to about 6.0. In one embodiment, the molar ratio of ammonium chloride/sodium chloride in the taste composition of the invention may be preferably about 0.2 to about 1.5, about 0.2 to about 2.0, about 0.2 to about 2.5, about 0.2 to about 6.0, about 0.4 to about 1.5, about 0.4 to about 2.0, about 0.4 to about 2.5, about 0.4 to about 6.0, about 0.5 to about 1.5, about 0.5 to about 2.0, about 0.5 to about 2.5 or about 0.5 to about 6.0.

The taste composition of the invention may be in any form. In one embodiment, the taste composition of the invention may be in a solid form including powder, tablet, or granule forms. A solid taste composition of the invention may be used as an alternative to common salt such as table salt. In one embodiment, the sodium ion content of the solid taste composition of the invention is about 10 wt% to about 30 wt%, preferably about 12 wt% to about 27 wt%, or further preferably about 15 wt% to about 24 wt%. In one embodiment, the sodium ion content of the solid taste composition of the invention may be preferably about 10 wt% to about 24 wt%, about 10 wt% to about 27 wt%, about 10 wt% to about 30 wt%, about 12 wt% to about 24 wt%, about 12 wt% to about 27 wt%, about 12 wt% to about 30 wt%, about 15 wt% to about 24 wt%, about 15 wt% to about 27 wt%, or about 15 wt% to about 30 wt%. In one embodiment, the taste composition of the invention may be dried products produced by drum drying, air drying, spray drying, vacuum drying, freeze drying, or a combination thereof.

In one embodiment, the solid taste composition of the invention comprises ammonium chloride in an amount of about 15 wt% to about 60 wt%, preferably about 20 wt% to about 55 wt%, or further preferably about 22 wt% to about 52 wt%. In one embodiment, the solid taste composition of the invention comprises ammonium chloride preferably in an amount of about 15 wt% to about 52 wt%, about 15 wt% to about 55 wt%, about 15 wt% to about 60 wt%, about 20 wt% to about 52 wt%, about 20 wt% to about 55 wt%, about 20 wt% to about 60 wt%, about 22 wt% to about 52 wt%, about 22 wt% to about 55 wt% or about 22 wt% to about 60 wt%.

In one embodiment, the solid taste composition of the invention comprises one or more sodium salts of an organic acid and/or one or more sodium salts of an inorganic acid except for hydrochloric acid in an amount of about 0.5 wt% to about 60 wt%, preferably about 1.0 wt% to about 55 wt%, or further preferably about 1.5 wt% to about 48 wt%. In one embodiment, the solid taste composition of the invention comprises one or more sodium salts of an organic acid and/or one or more sodium salts of an inorganic acid except for hydrochloric acid preferably in an amount of about 0.5 wt% to about 48 wt%, about 0.5 wt% to about 55 wt%, about 0.5 wt% to about 60 wt%, about 1.0 wt% to about 48 wt%, about 1.0 wt% to about 55 wt%, about 1.0 wt% to about 60 wt%, about 1.5 wt% to about 48 wt%, about 1.5 wt% to about 55 wt%, or about 1.5 wt% to about 60 wt%.

In one embodiment, the solid taste composition of the invention comprises sodium chloride in an amount of about 5 wt% to about 70 wt%, preferably about 7 wt% to about 65 wt%, or further preferably about 10 wt% to about 60 wt%. In one embodiment, the solid taste composition of the invention comprises sodium chloride preferably in an amount of about 5 wt% to about 60 wt%, about 5 wt% to about 65 wt%, about 5 wt% to about 70 wt%, about 7 wt% to about 60 wt%, about 7 wt% to about 65 wt%, about 7 wt% to about 70 wt%, about 10 wt% to about 60 wt%, about 10 wt% to about 65 wt%, or about 10 wt% to about 70 wt%.

In one embodiment, the taste composition of the invention may be in a liquid or pasty form. In one embodiment, a liquid or pasty taste composition of the invention may be concentrated products produced by vacuum concentration, membrane concentration, or a combination thereof. In one embodiment, the sodium ion concentration in the liquid or pasty taste composition of the invention is about 40 mM to about 3.0 M, preferably about 70 mM to about 2.4 M, or further preferably about 100 mM to about 2.1 M. In one embodiment, the sodium ion concentration in the liquid or pasty taste composition of the invention may be preferably about 40 mM to about 1.9 M, about 40 mM to about 2.1 M, about 40 mM to about 2.4 M, about 40 mM to about 3.0 M, about 70 mM to about 1.9 M, about 70 mM to about 2.1 M, about 70 mM to about 2.4 M, about 70 mM to about 3.0 M, about 100 mM to about 1.9 M, about 100 mM to about 2.1 M, about 100 mM to about 2.4 M, about 100 mM to about 3.0 M, about 300 mM to about 1.9 M, about 300 mM to about 2.1 M, about 300 mM to about 2.4 M or about 300 mM to about 3.0 M.

In one embodiment, the liquid or pasty taste composition of the invention comprises ammonium chloride in a concentration of about 20 mM to about 2.0 M, preferably about 25 mM to about 1.5 M, or further preferably about 30 mM to about 1.2 M. In one embodiment, the liquid or pasty taste composition of the invention comprises ammonium chloride preferably in a concentration of about 20 mM to about 1.2 M, about 20 mM to about 1.5 M, about 20 mM to about 2.0 M, about 20 mM to about 2.5 M, about 25 mM to about 1.2 M, about 25 mM to about 1.5 M, about 25 mM to about 2.0 M, about 25 mM to about 2.5 M, about 30 mM to about 1.2 M, about 30 mM to about 1.5 M, about 30 mM to about 2.0 M, or about 30 mM to about 2.5 M.

In one embodiment, the liquid or pasty taste composition of the invention comprises one or more sodium salts of an organic acid and/or one or more sodium salts of an inorganic acid except for hydrochloric acid in a concentration of about 0.05 mM to about 300 mM, preferably about 0.1 mM to about 250 mM, or further preferably about 0.2 mM to about 220 mM. In one embodiment, the liquid or pasty taste composition of the invention comprises one or more sodium salts of an organic acid and/or one or more sodium salts of an inorganic acid except for hydrochloric acid preferably in a concentration of about 0.05 mM to about 220 mM, about 0.05 mM to about 250 mM, about 0.05 mM to about 300 mM, about 0.1 mM to about 220 mM, about 0.1 mM to about 250 mM, about 0.1 mM to about 300 mM, about 0.2 mM to about 220 mM, about 0.2 mM to about 250 mM, or about 0.2 mM to about 300 mM.

In one embodiment, the liquid or pasty taste composition of the invention comprises sodium chloride in a concentration of about 5 mM to about 2.5 M, preferably about 10 mM to about 2.0 M, or further preferably about 12 mM to about 1.8 M. In one embodiment, the liquid or pasty taste composition of the invention comprises sodium chloride preferably in a concentration of about 5 mM to about 1.8 M, about 5 mM to about 2.0 M, about 5 mM to about 2.5 M, about 10 mM to about 1.8 M, about 10 mM to about 2.0 M, about 10 mM to about 2.5 M, about 12 mM to about 1.8 M, about 12 mM to about 2.0 M, or about 12 mM to about 2.5 M.

In one embodiment, the pH of the liquid or pasty taste composition of the invention may be preferably about 5.0 to about 7.5, about 5.0 to about 8.0, about 5.0 to about 8.6, about 5.3 to about 7.5, about 5.3 to about 8.0, about 5.3 to about 8.6, about 5.5 to about 7.5, about 5.5 to about 8.0 or about 5.5 to about 8.6.

### 4.3 Salt-Reduced Seasoning Produced Using the Taste Composition of the Present Invention

Salt-reduced seasoning of the invention is seasoning produced by adding the taste composition of the invention to seasoning materials. The content of the taste composition of the invention in the salt-reduced seasoning of the invention is not particularly limited and is optionally determined depending on the types or forms of seasoning or the desired intensity of the salty taste. For example, in one embodiment, the salt-reduced seasoning of the invention comprises the taste composition of the invention in an amount of about 0.5 wt% to about 95 wt%.

In one embodiment, the salt-reduced seasoning of the invention may be in any form. In one embodiment, the salt-reduced seasoning of the invention may be in a solid form including powder, tablet, or granule forms. In one embodiment, the salt-reduced seasoning of the invention may be dried products produced by drum drying, air drying, spray drying, vacuum drying, freeze drying, or a combination thereof. In one embodiment, dried powdered salt-reduced seasoning of the invention may be salt-reduced powdered soups for instant foods.

In one embodiment, the salt-reduced seasoning of the invention may be in a liquid or pasty form. In one embodiment, liquid salt-reduced seasoning of the invention may be, but not limited to, salt-reduced soy sauce, ponzu sauce, noodle soup base, cooking sake, sweet cooking rice wine, sauce, broth, dressing, mayonnaise, tomato ketchup, Worcestershire sauce, pork cutlet sauce, instant pickles seasoning, oyster sauce, or other various liquid seasonings. In one embodiment, the salt-reduced seasoning of the invention may be concentrated products produced by vacuum concentration, membrane concentration, or a combination thereof. In one embodiment, concentrated liquid salt-reduced seasoning of the invention may be a salt-reduced noodle soup base. In one embodiment, pasty salt-reduced seasoning of the invention may be, but not limited to, salt-reduced miso, chili bean sauce, gochujang, weiper, shantung, or other various pasty seasonings.

In one embodiment, the molar ratio of chloride ions/sodium ions in the solid, liquid, or pasty salt-reduced seasoning of the invention is about 1.30 to about 2.30. In one embodiment, the molar ratio of chloride ions/sodium ions in solid, liquid or pasty salt-reduced seasoning of the invention may be preferably about 1.30 to about 1.70, about 1.30 to about 1.80, about 1.30 to about 1.90, about 1.30 to about 2.00, about 1.30 to about 2.10, about 1.30 to about 2.30, about 1.35 to about 1.70, about 1.35 to about 1.80, about 1.35 to about 1.90, about 1.35 to about 2.00, about 1.35 to about 2.10, about 1.35 to about 2.30, about 1.36 to about 1.70, about 1.36 to about 1.80, about 1.36 to about 1.90, about 1.36 to about 2.00, about 1.36 to about 2.10, about 1.36 to about 2.30, about 1.37 to about 1.70, about 1.37 to about 1.80, about 1.37 to about 1.90, about 1.37 to about 2.00, about 1.37 to about 2.10, about 1.37 to about 2.30, about 1.38 to about 1.70, about 1.38 to about 1.80, about 1.38 to about 1.90, about 1.38 to about 2.00, about 1.38 to about 2.10, about 1.38 to about 2.30, about 1.39 to about 1.70, about 1.39 to about 1.80, about 1.39 to about 1.90, about 1.39 to about 2.00, about 1.39 to about 2.10, about 1.39 to about 2.30, about 1.40 to about 1.70, about 1.40 to about 1.80, about 1.40 to about 1.90, about 1.40 to about 2.00, about 1.40 to about 2.10, about 1.40 to about 2.30, about 1.41 to about 1.70, about 1.41 to about 1.80, about 1.41 to about 1.90, about 1.41 to about 2.00, about 1.41 to about 2.10, about 1.41 to about 2.30, about 1.42 to about 1.70, about 1.42 to about 1.80, about 1.42 to about 1.90, about 1.42 to about 2.00, about 1.42 to about 2.10, about 1.42 to about 2.30, about 1.43 to about 1.70, about 1.43 to about 1.80, about 1.43 to about 1.90, about 1.43 to about 2.00, about 1.43 to about 2.10, about 1.43 to about 2.30, about 1.44 to about 1.70, about 1.44 to about 1.80, about 1.44 to about 1.90, about 1.44 to about 2.00, about 1.44 to about 2.10, about 1.44 to about 2.30, about 1.45 to about 1.70, about 1.45 to about 1.80, about 1.45 to about 1.90, about 1.45 to about 2.00, about 1.45 to about 2.10, about 1.45 to about 2.30, about 1.46 to about 1.70, about 1.46 to about 1.80, about 1.46 to about 1.90, about 1.46 to about 2.00, about 1.46 to about 2.10, about 1.46 to about 2.30, about 1.47 to about 1.70, about 1.47 to about 1.80, about 1.47 to about 1.90, about 1.47 to about 2.00, about 1.47 to about 2.10, about 1.47 to about 2.30, about 1.48 to about 1.70, about 1.48 to about 1.80, about 1.48 to about 1.90, about 1.48 to about 2.00, about 1.48 to about 2.10, about 1.48 to about 2.30, about 1.49 to about 1.70, about 1.49 to about 1.80, about 1.49 to about 1.90, about 1.49 to about 2.00, about 1.49 to about 2.10, about 1.49 to about 2.30, about 1.50 to about 1.70, about 1.50 to about 1.80, about 1.50 to about 1.90, about 1.50 to about 2.00, about 1.50 to about 2.10, about 1.50 to about 2.30, about 1.60 to about 1.70, about 1.60 to about 1.80, about 1.60 to about 1.90, about 1.60 to about 2.00, about 1.60 to about 2.10, about 1.70 to about 1.80, about 1.70 to about 1.90, about 1.70 to about 2.00, about 1.70 to about 2.10, about 1.80 to about 1.90, about 1.80 to about 2.00, about 1.80 to about 2.10, about 1.90 to about 2.00, about 1.90 to about 2.10, or about 2.00 to about 2.10.

In one embodiment, a molar ratio of potassium ions/sodium ions in the liquid or pasty salt-reduced seasoning of the invention may be preferably 0 to about 0.037, 0 to about 0.040, 0 to about 0.044, 0 to about 0.047, 0 to about 0.050, 0 to about 0.052, 0 to about 0.055, 0 to about 0.059, 0 to about 0.060, 0 to about 0.063, 0 to about 0.065, 0 to about 0.067, 0 to about 0.070, 0 to about 0.074, 0 to about 0.077, 0 to about 0.080, 0 to about 0.081, 0 to about 0.083, 0 to about 0.085, 0 to about 0.088, 0 to about 0.090, 0 to about 0.093, 0 to about 0.095, 0 to about 0.098, 0 to about 0.100, 0 to about 0.103, 0 to about 0.105, 0 to about 0.108, or 0 to about 0.111

In one embodiment, the salt-reduced seasoning of the invention includes, but not limited to, soy sauce, ponzu sauce, miso, noodle soup base, cooking sake, sweet cooking rice wine, sauce, broth, dressing, mayonnaise, tomato ketchup, Worcestershire sauce, pork cutlet sauce, instant pickles seasoning, chili bean sauce, gochujang, weiper, shantung, oyster sauce, chicken stock, spice, or combined seasonings.

### 4.4 Salt-Reduced Foods or Beverages Produced Using the Taste Composition or Salt-Reduced Seasoning of the Present Invention

Salt-reduced foods or beverages of the invention are foods or beverages produced by adding the taste composition or salt-reduced seasoning of the invention to food or beverage materials or foods or beverages. The content of the taste composition or salt-reduced seasoning of the invention in the salt-reduced foods or beverages of the invention is not particularly limited and is optionally determined depending on the types or forms of foods or beverages or the desired intensity of the salty taste. For example, in one embodiment, the salt-reduced foods or beverages of the invention comprise the taste composition of the invention in an amount of about 0.01 wt% to about 50 wt%. In one embodiment, the molar ratio of chloride ions/sodium ions in the salt-reduced foods or beverages of the invention is about 1.30 to about 2.30. In one embodiment, the molar ratio of chloride ions/sodium ions in the salt-reduced foods or beverages of the invention may be preferably about 1.30 to about 1.70, about 1.30 to about 1.80, about 1.30 to about 1.90, about 1.30 to about 2.00, about 1.30 to about 2.10, about 1.30 to about 2.30, about 1.35 to about 1.70, about 1.35 to about 1.80, about 1.35 to about 1.90, about 1.35 to about 2.00, about 1.35 to about 2.10, about 1.35 to about 2.30, about 1.36 to about 1.70, about 1.36 to about 1.80, about 1.36 to about 1.90, about 1.36 to about 2.00, about 1.36 to about 2.10, about 1.36 to about 2.30, about 1.37 to about 1.70, about 1.37 to about 1.80, about 1.37 to about 1.90, about 1.37 to about 2.00, about 1.37 to about 2.10, about 1.37 to about 2.30, about 1.38 to about 1.70, about 1.38 to about 1.80, about 1.38 to about 1.90, about 1.38 to about 2.00, about 1.38 to about 2.10, about 1.38 to about 2.30, about 1.39 to about 1.70, about 1.39 to about 1.80, about 1.39 to about 1.90, about 1.39 to about 2.00, about 1.39 to about 2.10, about 1.39 to about 2.30, about 1.40 to about 1.70, about 1.40 to about 1.80, about 1.40 to about 1.90, about 1.40 to about 2.00, about 1.40 to about 2.10, about 1.40 to about 2.30, about 1.41 to about 1.70, about 1.41 to about 1.80, about 1.41 to about 1.90, about 1.41 to about 2.00, about 1.41 to about 2.10, about 1.41 to about 2.30, about 1.42 to about 1.70, about 1.42 to about 1.80, about 1.42 to about 1.90, about 1.42 to about 2.00, about 1.42 to about 2.10, about 1.42 to about 2.30, about 1.43 to about 1.70, about 1.43 to about 1.80, about 1.43 to about 1.90, about 1.43 to about 2.00, about 1.43 to about 2.10, about 1.43 to about 2.30, about 1.44 to about 1.70, about 1.44 to about 1.80, about 1.44 to about 1.90, about 1.44 to about 2.00, about 1.44 to about 2.10, about 1.44 to about 2.30, about 1.45 to about 1.70, about 1.45 to about 1.80, about 1.45 to about 1.90, about 1.45 to about 2.00, about 1.45 to about 2.10, about 1.45 to about 2.30, about 1.46 to about 1.70, about 1.46 to about 1.80, about 1.46 to about 1.90, about 1.46 to about 2.00, about 1.46 to about 2.10, about 1.46 to about 2.30, about 1.47 to about 1.70, about 1.47 to about 1.80, about 1.47 to about 1.90, about 1.47 to about 2.00, about 1.47 to about 2.10, about 1.47 to about 2.30, about 1.48 to about 1.70, about 1.48 to about 1.80, about 1.48 to about 1.90, about 1.48 to about 2.00, about 1.48 to about 2.10, about 1.48 to about 2.30, about 1.49 to about 1.70, about 1.49 to about 1.80, about 1.49 to about 1.90, about 1.49 to about 2.00, about 1.49 to about 2.10, about 1.49 to about 2.30, about 1.50 to about 1.70, about 1.50 to about 1.80, about 1.50 to about 1.90, about 1.50 to about 2.00, about 1.50 to about 2.10, about 1.50 to about 2.30, about 1.60 to about 1.70, about 1.60 to about 1.80, about 1.60 to about 1.90, about 1.60 to about 2.00, about 1.60 to about 2.10, about 1.70 to about 1.80, about 1.70 to about 1.90, about 1.70 to about 2.00, about 1.70 to about 2.10, about 1.80 to about 1.90, about 1.80 to about 2.00, about 1.80 to about 2.10, about 1.90 to about 2.00, about 1.90 to about 2.10, or about 2.00 to about 2.10.

In one embodiment, the salt-reduced foods or beverages of the invention may be in a liquid or pasty form. In one embodiment, a liquid or pasty salt-reduced foods or beverages of the invention may be, but not limited to, salt-reduced sauce such as pasta sauce, demi-glace sauce, white sauce, gratin sauce, hamburger steak sauce, or pizza sauce, soup such as ramen soup or hot pot soup, or soft drinks. In one embodiment, the molar ratio of chloride ions/sodium ions in the liquid or pasty salt-reduced foods or beverages of the invention is about 1.30 to about 2.30. In one embodiment, the molar ratio of chloride ions/sodium ions in the liquid or pasty salt-reduced foods or beverages of the invention may be preferably about 1.30 to about 1.70, about 1.30 to about 1.80, about 1.30 to about 1.90, about 1.30 to about 2.00, about 1.30 to about 2.10, about 1.30 to about 2.30, about 1.35 to about 1.70, about 1.35 to about 1.80, about 1.35 to about 1.90, about 1.35 to about 2.00, about 1.35 to about 2.10, about 1.35 to about 2.30, about 1.36 to about 1.70, about 1.36 to about 1.80, about 1.36 to about 1.90, about 1.36 to about 2.00, about 1.36 to about 2.10, about 1.36 to about 2.30, about 1.37 to about 1.70, about 1.37 to about 1.80, about 1.37 to about 1.90, about 1.37 to about 2.00, about 1.37 to about 2.10, about 1.37 to about 2.30, about 1.38 to about 1.70, about 1.38 to about 1.80, about 1.38 to about 1.90, about 1.38 to about 2.00, about 1.38 to about 2.10, about 1.38 to about 2.30, about 1.39 to about 1.70, about 1.39 to about 1.80, about 1.39 to about 1.90, about 1.39 to about 2.00, about 1.39 to about 2.10, about 1.39 to about 2.30, about 1.40 to about 1.70, about 1.40 to about 1.80, about 1.40 to about 1.90, about 1.40 to about 2.00, about 1.40 to about 2.10, about 1.40 to about 2.30, about 1.41 to about 1.70, about 1.41 to about 1.80, about 1.41 to about 1.90, about 1.41 to about 2.00, about 1.41 to about 2.10, about 1.41 to about 2.30, about 1.42 to about 1.70, about 1.42 to about 1.80, about 1.42 to about 1.90, about 1.42 to about 2.00, about 1.42 to about 2.10, about 1.42 to about 2.30, about 1.43 to about 1.70, about 1.43 to about 1.80, about 1.43 to about 1.90, about 1.43 to about 2.00, about 1.43 to about 2.10, about 1.43 to about 2.30, about 1.44 to about 1.70, about 1.44 to about 1.80, about 1.44 to about 1.90, about 1.44 to about 2.00, about 1.44 to about 2.10, about 1.44 to about 2.30, about 1.45 to about 1.70, about 1.45 to about 1.80, about 1.45 to about 1.90, about 1.45 to about 2.00, about 1.45 to about 2.10, about 1.45 to about 2.30, about 1.46 to about 1.70, about 1.46 to about 1.80, about 1.46 to about 1.90, about 1.46 to about 2.00, about 1.46 to about 2.10, about 1.46 to about 2.30, about 1.47 to about 1.70, about 1.47 to about 1.80, about 1.47 to about 1.90, about 1.47 to about 2.00, about 1.47 to about 2.10, about 1.47 to about 2.30, about 1.48 to about 1.70, about 1.48 to about 1.80, about 1.48 to about 1.90, about 1.48 to about 2.00, about 1.48 to about 2.10, about 1.48 to about 2.30, about 1.49 to about 1.70, about 1.49 to about 1.80, about 1.49 to about 1.90, about 1.49 to about 2.00, about 1.49 to about 2.10, about 1.49 to about 2.30, about 1.50 to about 1.70, about 1.50 to about 1.80, about 1.50 to about 1.90, about 1.50 to about 2.00, about 1.50 to about 2.10, about 1.50 to about 2.30, about 1.60 to about 1.70, about 1.60 to about 1.80, about 1.60 to about 1.90, about 1.60 to about 2.00, about 1.60 to about 2.10, about 1.70 to about 1.80, about 1.70 to about 1.90, about 1.70 to about 2.00, about 1.70 to about 2.10, about 1.80 to about 1.90, about 1.80 to about 2.00, about 1.80 to about 2.10, about 1.90 to about 2.00, about 1.90 to about 2.10, or about 2.00 to about 2.10.

In one embodiment, a molar ratio of potassium ions/sodium ions in the liquid or pasty salt-reduced foods or beverages of the invention may be preferably 0 to about 0.037, 0 to about 0.040, 0 to about 0.044, 0 to about 0.047, 0 to about 0.050, 0 to about 0.052, 0 to about 0.055, 0 to about 0.059, 0 to about 0.060, 0 to about 0.063, 0 to about 0.065, 0 to about 0.067, 0 to about 0.070, 0 to about 0.074, 0 to about 0.077, 0 to about 0.080, 0 to about 0.081, 0 to about 0.083, 0 to about 0.085, 0 to about 0.088, 0 to about 0.090, 0 to about 0.093, 0 to about 0.095, 0 to about 0.098, 0 to about 0.100, 0 to about 0.103, 0 to about 0.105, 0 to about 0.108, or 0 to about 0.111.

The salt-reduced foods or beverages of the invention generally replace all foods or beverages produced with table salt. In one embodiment, the salt-reduced foods or beverages of the invention include, but not limited to, curry roux, stew roux, hashed beef roux, sauce such as pasta sauce, demi-glace sauce, white sauce, gratin sauce, hamburger steak sauce, or pizza sauce, soup such as ramen soup or hot pot soup, instant foods such as instant noodle, miso soup or soup, retort foods such as curry, stew, soup or rice bowl seasonings, frozen food, freeze dried foods, deli seasonings, seasoned rice base, sushi base, Furikake, seasoning for Ochazuke, canning, canned beef, bottling, deli bread, pizza, Japanese pickles, salted plum, food boiled in soy sauce, salted fish, processed seaweed products such as salted kelp, cheese, raw ham, smoked meat such as ham, bacon, sausage, beef jerky, karpas, or salami, seasoned meat for yakiniku, steamed chicken, char siu, seasoned fish such as salt-grilled fish, Saikyozuke, mirin marinated fish pickles, fish cooked in miso, Teriyaki, Kabayaki, or pickled fish, salted salmon roe, spicy pollack roe, dried young sardines, dried fish, fish paste product such as Chikuwa, Kamaboko, Hanpen, Satsuma-age, or imitation crab meat, appetizers such as dry foods or nuts, snacks, Japanese confectionery, rice crackers, soft drinks, kelp tea, cooked food, delicatessen, confectionery, pet food or combination thereof.

### 4.5 Method for Using the Taste Composition of the Present Invention and Method for Producing Salt-Reduced Seasoning and Salt-Reduced Foods or Beverages

The taste composition of the invention may be used as an alternative to table salt to produce salt-reduced seasoning or salt-reduced foods or beverages. The taste composition of the invention may enhance the salty taste of foods or beverages when it is added to food or beverage materials. The salt-reduced seasoning or salt-reduced foods or beverages of the invention have reduced sodium ion content without compromising the salty taste compared to a normal seasoning or foods or beverages produced with table salt. The salt-reduced seasoning or salt-reduced foods or beverages of the invention are superior in providing a more pleasant taste with less flavor deterioration and unintended taste to well-known salt-reduced seasoning or salt-reduced foods or beverages produced using conventional demineralization or salt substitutes or salty taste enhancers. The salt-reduced seasoning or salt-reduced foods or beverages of the invention may be produced by replacing a part or all of the table salt added to seasoning materials or food or beverage materials with the taste composition of the invention in an amount required to exhibit the same intensity of the salty taste.

In one embodiment, the salt-reduced seasoning of the invention may be produced by adding the taste composition of the invention in an amount of about 0.5 wt% to about 95 wt% instead of table salt to seasoning materials. A method for adding the taste composition of the invention to seasoning materials is not particularly limited, and any known methods may be adopted to add it. After adding the taste composition of the invention to seasoning materials, it is preferred to mix them as needed.

In one embodiment, the salt-reduced foods or beverages of the invention may be produced by adding the taste composition or salt-reduced seasoning of the invention in an amount of about 0.01 wt% to about 50 wt% instead of table salt to food or beverage materials or foods or beverages. A method for adding the taste composition or salt-reduced seasoning of the invention to food or beverage materials or foods or beverages is not particularly limited, and any known methods may be adopted to add it. After adding the taste composition or salt-reduced seasoning of the invention to food or beverage materials or foods or beverages, it is preferred to mix them as needed. There are no particular limitations on when to add the taste composition or salt-reduced seasoning of the invention to food or beverage materials or foods or beverages, and it may be added at any time point. For example, in one embodiment, the taste composition or salt-reduced seasoning of the invention may be added during cooking or after the completion of cooking (for example, immediately before or during eating). Alternatively, in one embodiment, the taste composition of the invention may be added to seasonings or food or beverage materials used for cooking salt-reduced foods or beverages in advance.

### 4.6 Subject

In one embodiment, the salt-reduced seasoning or salt-reduced foods or beverages produced with the taste composition of the invention are for a mammalian subject including a human having cardiovascular disease or renal dysfunction, in particular prehypertension or hypertension. The salt-reduced seasoning or salt-reduced foods or beverages of the invention may improve elevated blood pressure and symptoms associated with it or prevent their deterioration in the subject. In one embodiment, the salt-reduced seasoning or salt-reduced foods or beverages produced with the taste composition of the invention may be also taken daily by a mammalian subject including a human having normal blood pressure. The salt-reduced seasoning or salt-reduced foods or beverages of the invention may maintain normal blood pressure and prevent cardiovascular disease or renal dysfunction, in particular hypertension and the complications thereof. Importantly, the salt-reduced foods or beverages of the invention do not compromise the taste of foods or beverages and thus do not impair quality of life.

### 4.7 Other Additives

In one embodiment, the taste composition or salt-reduced seasoning of the invention may be used alone or combined with other additives. In one embodiment, the other additives include, but not limited to, emulsifying agent, gelling agent, polysaccharide thickener, flavoring agent, coloring agent, preservative, antioxidant, stabilizing agent, pH adjuster, and the like.

### 4.8 Combination with Other Salt substitutes or Salty Taste Enhancers

In one embodiment, the taste composition or salt-reduced seasoning of the invention may be used alone or combined with other salt substitutes or salty taste enhancers. In one embodiment, the other salt substitutes or salty taste enhancers include, but not limited to, potassium chloride, magnesium chloride, calcium chloride, lysine hydrochloride, arginine hydrochloride, magnesium sulfate, or calcium sulfate (JP-A-2017-135996, JP-A-2017-200478, JP-A-2019-165640, and WO 2019/039441), γ-polyglutamic acid (WO 2007/108558), Ferulic acid, tocopherol or dimethyloctenone (JP-A-2016-29089), gentiobiose (JP-A-2017-118867), erythritol (JP-A-2017-143748), phytic acid (JP-A-2017-158543), tryptophan-containing dipeptide (JP-A-2017-217005), glucan and mannan (WO 2017/199897), DHA and cholesterol compounds (JP-A-2018-93732), chitosan or chitin (JP-A-2018-518197), piperine and limonene (JP-A-2019-150005), isopropanol (JP-A-2019-154387), spilanthol (JP-A-2020-143), carveol or carveol derivatives and eugenol (JP-A-2020-195337), theanine (JP-A-2020-198801), rotandon (JP-A-2021-171024), polyglycerol polyricinoleate (JP-A-2021-194001), pyrazine compounds (JP-A-2021-29121), dipeptide containing proline and alanine (JP-A-2022-538418), butter-oil-containing oil (WO 2016/084788), citrus peel extract (JP-A-2017-153380), tapioca flour, sweet potato flour or potato starch (JP-A-2017-108682), extracts of beans (WO 2017/150482), lactic acid fermentation product produced using oil-in-water emulsion containing milk raw materials as substrate (JP-A-2018-29547), gluten hydrolyzate (JP-A-2018-74967), enzyme-treated milk protein (JP-A-2019-110842), enzymatic decomposition product of sea lettuce (JP-A-2019-154402), ingredients derived from red yeast rice (JP-A-2020-108343), beetroot (JP-A-2020-511944 and JP-A-2022-9475), aqueous extract of ripe Japanese pepper (JP-A-2022-40714), and extracts of Persea (JP-A-2022-538558).

### 4.9 Method for Measuring Ion Content

In one embodiment, content of chloride ions or sodium ions in the taste composition, salt-reduced seasoning, or salt-reduced foods or beverages of the invention may be estimated from the amounts of ammonium chloride, one or more sodium salts of an organic acid and/or one or more sodium salts of an inorganic acid except for hydrochloric acid, and sodium chloride used for producing the taste composition, salt-reduced seasoning, or salt-reduced seasoning. This is because seasoning materials or food or beverage materials often have negligible chloride ion and sodium ion content.

In one embodiment, the contents of chloride ions in the salt-reduced seasoning or salt-reduced foods or beverages of the invention may be measured by precipitation titration including Mohr's method or Fajan's method, potentiometric titration, ion-selective electrode method or ion chromatography.

In one embodiment, the contents of sodium ions or potassium ions in the salt-reduced seasoning or salt-reduced foods or beverages of the invention may be measured by flame photometry, atomic absorption spectrophotometry, inductively coupled plasma optical emission spectrometry, inductively coupled plasma mass spectrometry, ion-selective electrode method, or ion chromatography.

### 4.10 Method for Measuring the Salty Taste

The enhanced salty taste provided by the taste composition of the invention may be measured by *in vitro* test system, *in vivo* test system, taste sensor, or sensory evaluation based on the human perception.

In one embodiment, the enhanced salty taste of the taste composition of the invention may be measured by the voltage clamp method using an *in vitro* expression system of ion channel TMC4. In one embodiment, the voltage clamp method may be a two-electrode voltage clamp method using Xenopus oocytes, or cell-attached mode, whole-cell mode, inside-out mode, outside-out mode, or perforated mode of patch-clamp method using cultured cell systems. In one embodiment, the enhanced salty taste of the taste composition of the invention may be measured by optical measurement of the membrane potential activity in the *in vitro* expression system of ion channel TMC4 using a voltage-sensitive dye.

In one embodiment, the enhanced salty taste of the taste composition of the invention may be measured by an electrophysiological test or behavioral test using animals in which at least one subunit of ENaC or TMC4, or two or more genes selected therefrom are knocked out. In one embodiment, the electrophysiological test may be a whole nerve recording or single-fiber recording of the chorda tympani nerve or lingual branch of the glossopharyngeal nerve. In one embodiment, the behavioral test may be two-bottle test or licking test.

In one embodiment, the enhanced salty taste of the taste composition of the invention may be measured using a taste sensor. The taste sensor can detect an alteration of membrane potential due to the presence of tastants on artificial lipid membranes and quantify their taste.

In one embodiment, the enhanced salty taste of the taste composition of the invention may be measured by sensory evaluation. The sensory evaluation may be either analytical sensory evaluation or preference sensory evaluation. In one embodiment, the analytical sensory evaluation may be two-point discrimination test, triangle test, paired comparison method, ranking test, rating test, paired comparison test, or Scheffe's paired comparison test. In one embodiment, the preference sensory evaluation may be two-point preference test, ranking test, rating test, paired comparison test, or Scheffe's paired comparison test.

### EXAMPLES

### 5. Examples

### 5.1 Experimental Example 1: Salty Taste Enhancement Ratio of the Taste Composition of the Present Invention is Increased in proportion to a Molar Ratio of Chloride Ions/Sodium Ions

In the development of salt substitutes or salty taste enhancers produced by combining more than one raw material, the intensity of the salty taste and unintended taste has been conventionally optimized by empirically changing the ratio of each component without any guidance. The present inventors focused on a molar ratio of chloride ions/sodium ions as a parameter that can adjust the salty taste intensity systematically while keeping sodium ions at low level to prevent onset or progression of hypertension. That is, the present inventors conceived an approach to enhance the salty taste by increasing an anion effect in TMC4-expressing taste receptor cells.

In Experimental Examples 1 to 6, the following reagents have been used (Table 1).

**Table 1. Used reagents**

| Reagent Name | Manufacturer | Grade |
|---|---|---|
| ammonium chloride | Junsei Chemical Co.,Ltd. | food additive |
| table salt (containing more than 99.0% of sodium chloride) | NAIKAI Salt Industries Co.,LTD | food |
| trisodium citrate dihydrate | KANTO CHEMICAL CO., INC | food additive |
| sodium L-tartrate dihydrate | KANTO CHEMICAL CO., INC | special |
| sodium DL-malate 0.8 hydrate | Wako Pure Chemical Industries, Ltd. | special |
| sodium gluconate | ZEST Co., Ltd. | food additive |
| sodium L-aspartate monohydrate | Junsei Chemical Co.,Ltd. | food additive |
| sodium L-glutamate monohydrate | margo corporation | food additive |
| disodium 5'-adenylate 1.8 hydrate | FUJIFILM Wako Pure Chemical Corporation | special |
| trisodium phosphate 12 hydrate | KANTO CHEMICAL CO., INC | special |
| sodium lactate | FUJIFILM Wako Pure Chemical Corporation | food additive |
| sodium acetate trihydrate | Junsei Chemical Co.,Ltd. | food additive |
| sea salt ( 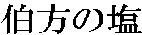 ^{®}) | HAKATA SALT co., ltd | food |
| high potassium-containing salt-reduced seasoning A ( 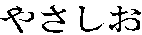 ^{®}) | Ajinomoto Co., Inc. | food |
| lemon-containing salt-reduced seasoning ( 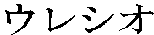 ^{®}) | POKKA SAPPORO Food & Beverage Ltd. | food |
| high potassium-containing salt-reduced seasoning B ( 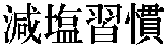 ^{®}) | Taisho Pharmaceutical Co., Ltd. | food |
| potassium- and iodine-containing salt-reduced seasoning A (GoodSalt^{®}) | GoodSalt USA LLC | food |
| potassium- and iodine-containing salt-reduced seasoning B (LITE SALT^{™}) | Morton Salt, Inc. | food |

At first, the present inventors examined how the salty taste intensity of the taste composition of the invention comprising trisodium citrate as a sodium salt of an organic acid changes when a molar ratio of chloride ions/sodium ions increases.

Each sample was prepared by dissolving ammonium chloride, trisodium citrate, and table salt in purified water in a measuring cylinder.

The intensity of the salty taste and the taste other than the salty taste (unintended taste) was measured by a rating test of analytical sensory evaluation. Four healthy adult men and four healthy adult women who consented to the study participated as panelists. In the following experimental examples 1 to 6, each study was conducted on five to eight subjects optionally selected from these eight subjects. Before starting the studies, each panelist was trained to accurately evaluate the salty taste intensity of 0.5%, 0.6%, 0.7%, 0.8%, 0.9%, and 1.0% (w/v) table salt aqueous solution (standard solution). Briefly, each panelist tasted and swallowed a small amount of the standard solution of each concentration from a 3-ounce plastic cup made of a material that does not affect the taste and odor of the samples. In the main study, each panelist tasted and swallowed a small amount of each sample in which a molar ratio of chloride ions/sodium ions was adjusted to a predetermined value, from a 3-ounce plastic cup, and determined which of the six grades of the standard solutions had a salty taste intensity equivalent to that of the sample. Sodium chloride concentration (w/v%) and sodium ion concentration (mM) of each standard solution are shown in Table 2.

**Table 2. The salty taste intensity and sodium ion concentration of standard solutions**

| sodium chloride (w/v%) | [Na⁺] (mM) |
|---|---|
| 0.5 | 86 |
| 0.6 | 103 |
| 0.7 | 120 |
| 0.8 | 137 |
| 0.9 | 154 |
| 1 | 171 |

In parallel, each panelist scored the intensity of the taste other than the salty taste (unintended taste) of each sample in the following five grades: 0; no unintended taste, 1; there is a subtle unintended taste, 2; there is a minor unintended taste, but it is tolerable, 3; there is an unintended taste, 4; there is no salty taste.

Examples 1-1 to 1-14 were prepared using the following quantity ratios of reagents (Tables 3 to 5).

**Table 3. Composition of samples comprising trisodium citrate**

| | Example 1-1 | Example 1-2 | Example 1-3 | Example 1-4 | Example 1-5 |
|---|---|---|---|---|---|
| ammonium chloride | 30.9%*¹ | 33. 0% | 35. 0% | 37. 1% | 39. 3% |
| trisodium citrate dihydrate | 27. 1% | 20. 7% | 14. 4% | 8. 5% | 1. 7% |
| table salt | 42. 0% | 46. 3% | 50. 6% | 54. 4% | 59. 0% |
| Total | 100.0% | 100. 0% | 100.0% | 100.0% | 100.0% |
| Sodium content*² | 23. 7% | 23. 7% | 23. 7% | 23. 6% | 23. 6% |
| pH*³ | 7.14 | 7.08 | 6.95 | 6.83 | 6.35 |

| | | | | | |
|---|---|---|---|---|---|
| ^{*1} Contents of each component used for sample preparation in reagent mixtures are expressed in wt%. ^{*2} Sodium contents (wt%) in reagent mixtures were calculated based on the weight of anhydrous salts. ^{*3} A pH of a solution in which each sample is dissolved at 1% (w/v) in purified water is expressed. | | | | | |

**Table 4. Composition of samples comprising trisodium citrate**

| | Example 1-6 | Example 1-7 | **Example** 1-8 | **Example** 1-9 |
|---|---|---|---|---|
| ammonium chloride | 39. 1%*¹ | 41. 0% | 44. 5% | 48. 2% |
| trisodium citrate dihydrate | 31. 3% | 26. 0% | 15.5% | 5. 1% |
| table salt | 29. 6% | 33. 0% | 40. 0% | 46.8% |
| Total | 100.0% | 100. 0% | 100. 0% | 100. 0% |
| Sodium content*² | 19. 7% | 19. 7% | 19. 7% | 19. 7% |
| pH*³ | 7.16 | 7.08 | 6. 91 | 6.64 |

| | | | | |
|---|---|---|---|---|
| ^{*1} Contents of each component used for sample preparation in reagent mixtures are expressed in wt%. ^{*2} Sodium contents (wt%) in reagent mixtures were calculated based on the weight of anhydrous salts. ^{*3} A pH of a solution in which each sample is dissolved at 1% (w/v) in purified water is expressed. | | | | |

**Table 5. Composition of samples comprising trisodium citrate**

| | Example 1-10 | Example 1-11 | Example 1-12 | **Example** 1-13 | Example 1-14 |
|---|---|---|---|---|---|
| ammonium chloride | 43.1%*¹ | 45.9% | 48.9% | 51.7% | 54.7% |
| trisodium citrate dihydrate | 47.5% | 38.9% | 30.9% | 23.3% | 14.7% |
| table salt | 9.4% | 15.2% | 20.2% | 25.0% | 30.6% |
| Total | 100.0% | 100.0% | 100.0% | 100.0% | 100.0% |
| Sodium content*² | 15.8% | 15. 8% | 15. 8% | 15.7% | 15.8% |
| pH*³ | 7.22 | 7. 16 | 7.07 | 7.00 | 6.89 |

| | | | | | |
|---|---|---|---|---|---|
| ^{*1} Contents of each component used for sample preparation in reagent mixtures are expressed in wt%. ^{*2} Sodium contents (wt%) in reagent mixtures were calculated based on the weight of anhydrous salts. ^{*3} A pH of a solution in which each sample is dissolved at 1% (w/v) in purified water is expressed. | | | | | |

The results of sensory evaluation of each sample in which sodium concentrations are adjusted to 72 mM (Examples 1-1 to 1-5), 60 mM (Examples 1-6 to 1-9), or 48 mM (Examples 1-10 to 1-14) are shown in Tables 6 to 8, respectively.

**Table 6. Evaluation of the taste of a taste composition comprising trisodium citrate (sodium ion concentration 72 mM; n = 7)**

| | Example 1-1 | Example 1-2 | Example 1-3 | Example 1-4 | **Example** 1-5 |
|---|---|---|---|---|---|
| ammonium chloride (mM) | 41.9 | 44. 3 | 46. 6 | 49. 1 | 51. 6 |
| trisodium citrate (mM) | 6. 7 | 5. 1 | 3.5 | 2. 0 | 0.4 |
| sodium chloride (mM) | 52. 0 | 56. 9 | 61. 7 | 65. 8 | 70. 8 |
| [Na⁺] (mM) | 72 | 72 | 72 | 72 | 72 |
| [Cl⁻]/[Na⁺] | 1.30 | 1.40 | 1.50 | 1.60 | 1. 70 |
| [NH4Cl]/[NaCl] | 0.8 | 0.8 | 0.8 | 0.7 | 0. 7 |
| Salty taste intensity*¹ | 0.64±0.07 | 0.68±0.06 | 0.75±0.06 | 0.76±0.09 | 0.82±0.14 |
| Salty taste enhancement ratio *² | 1.51 | 1.62 | 1. 79 | 1. 82 | 1. 94 |
| Unintended taste *³ | 1.14 | 1.00 | 1. 29 | 1. 29 | 1.43 |

| | | | | | |
|---|---|---|---|---|---|
| *¹ The salty taste intensity is shown as a concentration (w/v%) of sodium chloride in a corresponding standard solution and is expressed as mean ± standard deviation. *² The salty taste enhancement ratio represents a ratio obtained by dividing a mean of the salty taste intensity of each sample by the concentration of sodium chloride aqueous solution comprising 72 mM sodium ions (0.42%). ^{*3} The unintended taste is shown as a mean. | | | | | |

**Table 7. Evaluation of the taste of a taste composition comprising trisodium citrate (sodium ion concentration 60 mM; n = 5)**

| | Example 1-6 | Example 1-7 | Example 1-8 | **Example** 1-9 |
|---|---|---|---|---|
| ammonium chloride (mM) | 53.3 | 55.4 | 59.4 | 63.4 |
| trisodium citrate (mM) | 7.7 | 6.4 | 3.8 | 1.2 |
| sodium chloride (mM) | 36. 8 | 40. 9 | 48. 8 | 56. 3 |
| [Na⁺] (mM) | 60 | 60 | 60 | 60 |
| [Cl⁻]/[Na⁺] | 1.50 | 1.60 | 1. 80 | 2.00 |
| [NH4Cl]/[NaCl] | 1.4 | 1.4 | 1.2 | 1.1 |
| Salty taste intensity*¹ | 0.60±0.08 | 0.70±0.08 | 0.78±0.12 | 0.85±0.10 |
| Salty taste enhancement ratio *² | 1. 70 | 1. 98 | 2. 21 | 2.41 |
| **Unintended** taste *³ | 2.00 | 1.40 | 2. 00 | 1. 80 |

| | | | | |
|---|---|---|---|---|
| ^{*1} The salty taste intensity is shown as a concentration (w/v%) of sodium chloride in a corresponding standard solution and is expressed as mean ± standard deviation. ^{*2} The salty taste enhancement ratio represents a ratio obtained by dividing a mean of the salty taste intensity of each sample by the concentration of sodium chloride aqueous solution comprising 60 mM sodium ions (0.35%). ^{*3} The unintended taste is shown as a mean. | | | | |

**Table 8. Evaluation of the taste of a taste composition comprising trisodium citrate (sodium ion concentration 48 mM; n = 5)**

| | Example 1-10 | Example 1-11 | **Example** 1-12 | Example 1-13 | Example 1-14 |
|---|---|---|---|---|---|
| ammonium chloride (mM) | 59.9 | 63. 1 | 66. 5 | 69. 6 | 72.9 |
| **trisodium** citrate (mM) | 12.0 | 9. 7 | 7. 6 | 5. 7 | 3. 6 |
| sodium chloride (mM) | 12.0 | 19. 1 | 25. 2 | 30.8 | 37. 3 |
| [Na⁺] (mM) | 48 | 48 | 48 | 48 | 48 |
| [Cl⁻]/[Na⁺] | 1. 50 | 1. 70 | 1.90 | 2. 10 | 2. 30 |
| [NH4Cl]/[NaCl] | 5.0 | 3.3 | 2. 6 | 2. 3 | 2.0 |
| Salty taste intensity*¹ | 0.52±0.04 | 0.64±0. 09 | 0.66±0.05 | 0.73±0.04 | 0.75±0.05 |
| Salty taste enhancement ratio*² | 1.84 | 2.27 | 2.34 | 2.59 | 2. 66 |
| Unintended taste *³ | 1.80 | 1.80 | 1.60 | 2.00 | 2. 60 |

| | | | | | |
|---|---|---|---|---|---|
| ^{*1} The salty taste intensity is shown as a concentration (w/v%) of sodium chloride in a corresponding standard solution and is expressed as mean ± standard deviation. ^{*2} The salty taste enhancement ratio represents a ratio obtained by dividing a mean of the salty taste intensity of each sample by the concentration of sodium chloride aqueous solution comprising 48 mM sodium ions (0.28%). ^{*3} The unintended taste is shown as a mean. | | | | | |

In Examples 1-1 to 1-14 shown in Tables 6 to 8, Pearson's correlation coefficient between the molar ratio of chloride ions/sodium ions and salty taste enhancement ratio was 0.966, demonstrating a very high correlation between them.

Here, as the sodium ion concentration in the samples was lowered and the concentrations of ammonium chloride and trisodium citrate in the samples increased, the intensity of the sour taste as an unintended taste tended to increase (see Example 1-14 in Table 8). In contrast, when sodium ion concentration was 72 mM or 60 mM, the unintended taste was minimal or kept at a tolerable level at all examined molar ratios of chloride ions/sodium ions (Tables 6 and 7).

### 5.2 Experimental Example 2: Elevation of Salty Taste Enhancement Ratio of the Taste Composition of the Present Invention associated with Increase in the Molar Ratio of Chloride Ions/Sodium Ions is Generalized to Sodium Salts of an Organic Acid and Inorganic Acid except for Hydrochloric Acid

A similar test was then performed using the same procedure as in Experimental Example 1, except that trisodium citrate in the samples was replaced with a sodium salt of another organic acid. Specifically, sodium L-tartrate, sodium DL-malate, sodium gluconate, sodium L-aspartate, sodium L-glutamate, or disodium 5'-adenylate were used as a sodium salt of an organic acid to examine the correlation between the molar ratio of chloride ions/sodium ions and salty taste enhancement ratio. The results are shown in Tables 10, 12, 14, 16, 18, and 20.

Examples 2-1 to 2-4 in which sodium L-tartrate was used as a sodium salt of an organic acid were prepared using the following quantity ratios of reagents (Table 9).

**Table 9. Composition of samples comprising sodium L-tartrate**

| | Example 2-1 | **Example** 2-2 | Example 2-3 | Example 2-4 |
|---|---|---|---|---|
| ammonium chloride | 28.7%*¹ | 33. 8% | 39. 1% | 46.2% |
| sodium L-tartrate dihydrate | 27.7% | 15. 3% | 2.2% | 32.1% |
| table salt | 43.6% | 50. 9% | 58.7% | 21. 7% |
| Total | 100. 0% | 100. 0% | 100.0% | 100.0% |
| Sodium content*² | 23. 7% | 23.6% | 23. 6% | 15. 8% |
| pH*³ | 6. 28 | 6. 12 | 5. 74 | 6.26 |

| | | | | |
|---|---|---|---|---|
| ^{*1} Contents of each component used for sample preparation in reagent mixtures are expressed in wt%. ^{*2} Sodium contents (wt%) in reagent mixtures were calculated based on the weight of anhydrous salts. ^{*3} A pH of a solution in which each sample is dissolved at 1% (w/v) in purified water is expressed. | | | | |

The results of sensory evaluation of Examples 2-1 to 2-4 are shown (Table 10). Pearson's correlation coefficient between the molar ratio of chloride ions/sodium ions and salty taste enhancement ratio was 0.940, demonstrating a very high correlation between them, similar to the case using trisodium citrate.

**Table 10. Evaluation of the taste of a taste composition comprising sodium L-tartrate (n = 5)**

| | Example 2-1 | Example2-2 | **Example** 2-3 | **Example** 2-4 |
|---|---|---|---|---|
| ammonium chloride (mM) | 39. 3 | 45. 4 | 51.4 | 63.6 |
| sodium L-tartrate (mM) | 8. 8 | 4.8 | 0.7 | 10.3 |
| sodium chloride (mM) | 54. 6 | 62.4 | 70.5 | 27.4 |
| [Na⁺] (mM) | 72 | 72 | 72 | 48 |
| [Cl⁻]/[Na⁺] | 1. 30 | 1. 50 | 1. 70 | 1.90 |
| [NH4Cl]/[NaCl] | 0. 7 | 0. 7 | 0.7 | 2.3 |
| Salty taste intensity*¹ | 0. 67 ±0. 14 | 0. 70±0. 04 | 0.80±0.06 | 0.67±0.08 |
| Salty taste enhancement ratio *² | 1.60 | 1. 67 | 1. 90 | 2.39 |
| Unintended taste *³ | 0. 60 | 2. 00 | 1. 40 | 1. 60 |

| | | | | |
|---|---|---|---|---|
| ^{*1} The salty taste intensity is shown as a concentration (w/v%) of sodium chloride in a corresponding standard solution and is expressed as mean ± standard deviation. ^{*2} The salty taste enhancement ratio represents a ratio obtained by dividing a mean of the salty taste intensity of each sample by the concentration of sodium chloride aqueous solution comprising 72 mM or 48 mM sodium ions (0.42% or 0.28%). ^{*3} The unintended taste is shown as a mean. | | | | |

Examples 3-1 to 3-3 in which sodium DL-malate was used as a sodium salt of an organic acid were prepared using the following quantity ratios of reagents (Table 11).

**Table 11. Composition of samples comprising sodium DL-malate**

| | Example 3-1 | Example 3-2 | Example 3-3 |
|---|---|---|---|
| ammonium chloride | 30. 8%*¹ | 35. 1% | 39.3% |
| sodium DL-malate 0.8 hydrate | 26. 0% | 13. 6% | 1.8% |
| table salt | 43.2% | 51. 3% | 58.9% |
| Total | 100. 0% | 100.0% | 100.0% |
| Sodium content*² | 23. 7% | 23. 7% | 23.6% |
| pH*³ | 6. 52 | 6. 41 | 6.01 |

| | | | |
|---|---|---|---|
| ^{*1} Contents of each component used for sample preparation in reagent mixtures are expressed in wt%. ^{*2} Sodium contents (wt%) in reagent mixtures were calculated based on the weight of anhydrous salts. ^{*3} A pH of a solution in which each sample is dissolved at 1% (w/v) in purified water is expressed. | | | |

The results of sensory evaluation of Examples 3-1 to 3-3 are shown (Table 12). Pearson's correlation coefficient between the molar ratio of chloride ions/sodium ions and salty taste enhancement ratio was 0.999, demonstrating a very high correlation between them.

**Table 12. Evaluation of the taste of a taste composition comprising sodium DL-malate (n = 5)**

| | Example 3-1 | Example 3-2 | Example 3-3 |
|---|---|---|---|
| ammonium chloride (mM) | 41. 2 | 46. 4 | 51.5 |
| sodium DL-malate (mM) | 9. 6 | 5. 0 | 0. 7 |
| sodium chloride (mM) | 52. 7 | 62. 1 | 70. 6 |
| [Na⁺] (mM) | 72 | 72 | 72 |
| [Cl⁻]/[Na⁺] | 1.30 | 1.50 | 1. 70 |
| [NH4Cl] / [NaCl] | 0.8 | 0.7 | 0.7 |
| Salty taste intensity*¹ | 0.62±0.04 | 0.71±0.07 | 0.81±0.07 |
| Salty taste enhancement ratio*² | 1.48 | 1.69 | 1. 93 |
| Unintended taste *³ | 2. 10 | 1.80 | 1.60 |

| | | | |
|---|---|---|---|
| ^{*1} The salty taste intensity is shown as a concentration (w/v%) of sodium chloride in a corresponding standard solution and is expressed as mean ± standard deviation. ^{*2} The salty taste enhancement ratio represents a ratio obtained by dividing a mean of the salty taste intensity of each sample by the concentration of sodium chloride aqueous solution comprising 72 mM sodium ions (0.42%). ^{*3} The unintended taste is shown as a mean. | | | |

Examples 4-1 to 4-3 in which sodium gluconate was used as a sodium salt of an organic acid were prepared using the following quantity ratios of reagents (Table 13).

**Table 13. Composition of samples comprising sodium gluconate**

| | Example 4-1 | Example 4-2 | Example 4-3 |
|---|---|---|---|
| ammonium chloride | 22.2%*¹ | 30.6% | 38. 7% |
| sodium gluconate | 24.1% | 12.5% | 1. 7% |
| table salt | 53.7% | 56.9% | 59. 6% |
| Total | 100.0% | 100.0% | 100. 0% |
| Sodium content*² | 23. 7% | 23.7% | 23. 6% |
| pH*³ | 6. 09 | 5.9 | 5.64 |

| | | | |
|---|---|---|---|
| ^{*1} Contents of each component used for sample preparation in reagent mixtures are expressed in wt%. ^{*2} Sodium contents (wt%) in reagent mixtures were calculated based on the weight of anhydrous salts. ^{*3} A pH of a solution in which each sample is dissolved at 1% (w/v) in purified water is expressed. | | | |

The results of sensory evaluation of Examples 4-1 to 4-3 are shown (Table 14). Pearson's correlation coefficient between the molar ratio of chloride ions/sodium ions and salty taste enhancement ratio was 0.970, demonstrating a very high correlation between them.

**Table 14. Evaluation of the taste of a taste composition comprising sodium gluconate (n = 5)**

| | Example 4-1 | Example 4-2 | Example4-3 |
|---|---|---|---|
| **ammonium** chloride (mM) | 29.1 | 40.1 | 50.6 |
| sodium gluconate (mM) | 7.7 | 4.0 | 0.5 |
| sodium chloride (mM) | 64.3 | 68.1 | 71.4 |
| [Na⁺] (mM) | 72 | 72 | 72 |
| [C1⁻]/[Na⁺] | 1.30 | 1.50 | 1.70 |
| [NH4Cl] / [NaCl] | 0.5 | 0.6 | 0.7 |
| Salty taste intensity*¹ | 0.63±0.11 | 0.68±0.02 | 0. 82±0. 04 |
| Salty taste enhancement ratio*² | 1.50 | 1.63 | 1.96 |
| Unintended taste*³ | 1.00 | 1.20 | 2.00 |

| | | | |
|---|---|---|---|
| ^{*1} The salty taste intensity is shown as a concentration (w/v%) of sodium chloride in a corresponding standard solution and is expressed as mean ± standard deviation. ^{*2} The salty taste enhancement ratio represents a ratio obtained by dividing a mean of the salty taste intensity of each sample by the concentration of sodium chloride aqueous solution comprising 72 mM sodium ions (0.42%). ^{*3} The unintended taste is shown as a mean. | | | |

Examples 5-1 to 5-3 in which sodium L-aspartate was used as a sodium salt of an organic acid were prepared using the following quantity ratios of reagents (Table 15).

**Table 15. Composition of samples comprising sodium L-aspartate**

| | Example 5-1 | Example 5-2 | Example 5-3 |
|---|---|---|---|
| ammonium chloride | 24.1%*¹ | 31.6% | 38.9% |
| sodium L-aspartate monohydrate | 26.0% | 13.5% | 1.4% |
| table salt | 49.8% | 54.9% | 59.6% |
| Total | 100.0% | 100.0% | 100.0% |
| Sodium content*² | 23.7% | 23.7% | 23.7% |
| pH*³ | 6.26 | 6.07 | 5.69 |

| | | | |
|---|---|---|---|
| ^{*1} Contents of each component used for sample preparation in reagent mixtures are expressed in wt%. ^{*2} Sodium contents (wt%) in reagent mixtures were calculated based on the weight of anhydrous salts. ^{*3} A pH of a solution in which each sample is dissolved at 1% (w/v) in purified water is expressed. | | | |

The results of sensory evaluation of Examples 5-1 to 5-3 are shown (Table 16). Pearson's correlation coefficient between the molar ratio of chloride ions/sodium ions and salty taste enhancement ratio was 0.997, demonstrating a very high correlation between them.

**Table 16. Evaluation of the taste of a taste composition comprising sodium L-aspartate (n = 6)**

| | Example5-1 | Example 5-2 | Example 5-3 |
|---|---|---|---|
| ammonium chloride (mM) | 32. 5 | 41.9 | 51.0 |
| sodium L-aspartate (mM) | 10.8 | 5.6 | 0.6 |
| sodium chloride (mM) | 61. 3 | 66. 7 | 71. 5 |
| [Na⁺] (mM) | 72 | 72 | 72 |
| [Cl⁻]/[Na⁺] | 1.30 | 1.50 | 1. 70 |
| [NH4Cl]/[NaCl] | 0.5 | 0.6 | 0. 7 |
| Salty taste intensity*¹ | 0.65±0.05 | 0.73±0.04 | 0. 83±0. 03 |
| Salty taste enhancement ratio*² | 1. 55 | 1. 73 | 1. 97 |
| Unintended taste*³ | 1. 17 | 1. 33 | 1. 75 |

| | | | |
|---|---|---|---|
| ^{*1} The salty taste intensity is shown as a concentration (w/v%) of sodium chloride in a corresponding standard solution and is expressed as mean ± standard deviation. ^{*2} The salty taste enhancement ratio represents a ratio obtained by dividing a mean of the salty taste intensity of each sample by the concentration of sodium chloride aqueous solution comprising 72 mM sodium ions (0.42%). ^{*3} The unintended taste is shown as a mean. | | | |

Examples 6-1 to 6-3 in which sodium L-glutamate was used as a sodium salt of an organic acid were prepared using the following quantity ratios of reagents (Table 17).

**Table 17. Composition of samples comprising sodium L-glutamate**

| | Example 6-1 | Example 6-2 | Example 6-3 |
|---|---|---|---|
| ammonium chloride | 23.7%*¹ | 31.0% | 38.9% |
| sodium L-glutamate monohydrate | 25.6% | 14.1% | 1.6% |
| table salt | 50.7% | 54.9% | 59.6% |
| Total | 100.0% | 100.0% | 100.0% |
| Sodium content*² | 23. 7% | 23. 7% | 23. 7% |
| pH*³ | 6. 58 | 6. 37 | 5. 89 |

| | | | |
|---|---|---|---|
| ^{*1} Contents of each component used for sample preparation in reagent mixtures are expressed in wt%. ^{*2} Sodium contents (wt%) in reagent mixtures were calculated based on the weight of anhydrous salts. ^{*3} A pH of a solution in which each sample is dissolved at 1% (w/v) in purified water is expressed. | | | |

The results of sensory evaluation of Examples 6-1 to 6-3 are shown (Table 18). Pearson's correlation coefficient between the molar ratio of chloride ions/sodium ions and salty taste enhancement ratio is 0.988, demonstrating a very high correlation between them.

**Table 18. Evaluation of the taste of a taste composition comprising sodium L-glutamate (n = 5)**

| | Example 6-1 | Example 6-2 | Example6-3 |
|---|---|---|---|
| ammonium chloride (mM) | 31.8 | 41.1 | 51.0 |
| sodium L-glutamate (mM) | 9.8 | 5.3 | 0.6 |
| sodium chloride (mM) | 62. 2 | 66. 7 | 71. 4 |
| [Na⁺] (mM) | 72 | 72 | 72 |
| [Cl⁻]/[Na⁺] | 1. 30 | 1. 50 | 1. 70 |
| [NH4Cl]/[NaCl] | 0.5 | 0.6 | 0. 7 |
| Salty taste intensity*¹ | 0. 67±0. 07 | 0.76±0.05 | 0.81±0.07 |
| Salty taste enhancement ratio*² | 1.60 | 1.81 | 1.93 |
| Unintended taste*³ | 2.80 | 2.40 | 2.00 |

| | | | |
|---|---|---|---|
| ^{*1} The salty taste intensity is shown as a concentration (w/v%) of sodium chloride in a corresponding standard solution and is expressed as mean ± standard deviation. ^{*2} The salty taste enhancement ratio represents a ratio obtained by dividing a mean of the salty taste intensity of each sample by the concentration of sodium chloride aqueous solution comprising 72 mM sodium ions (0.42%). ^{*3} The unintended taste is shown as a mean. | | | |

Examples 7-1 to 7-3 in which disodium 5'-adenylate was used as a sodium salt of an organic acid were prepared using the following quantity ratios of reagents (Table 19).

**Table 19. Composition of samples comprising disodium 5'-adenylate**

| | Example 7-1 | Example 7-2 | Example 7-3 |
|---|---|---|---|
| ammonium chloride | 22.6%*¹ | 30.5% | 38.7% |
| disodium 5'-adenylate 1.8 hydrate | 25.5% | 13.8% | 1.5% |
| table salt | 51.9% | 55.7% | 59.8% |
| Total | 100.0% | 100.0% | 100. 0% |
| Sodium content*² | 23.6% | 23.6% | 23.7% |
| pH*³ | 6.84 | 6.77 | 6.36 |

| | | | |
|---|---|---|---|
| ^{*1} Contents of each component used for sample preparation in reagent mixtures are expressed in wt%. ^{*2} Sodium contents (wt%) in reagent mixtures were calculated based on the weight of anhydrous salts. ^{*3} A pH of a solution in which each sample is dissolved at 1% (w/v) in purified water is expressed. | | | |

The results of sensory evaluation of Examples 7-1 to 7-3 are shown (Table 20). Pearson's correlation coefficient between the molar ratio of chloride ions/sodium ions and salty taste enhancement ratio was 0.999, demonstrating a very high correlation between them.

**Table 20. Evaluation of the taste of a taste composition comprising disodium 5'-adenylate (n = 5)**

| | Example 7-1 | Example 7-2 | Example 7-3 |
|---|---|---|---|
| ammonium chloride (mM) | 30. 1 | 40.4 | 50.8 |
| disodium 5'-adenylate (mM) | 4.3 | 2.3 | 0.2 |
| sodium chloride (mM) | 63. 4 | 67. 4 | 71. 7 |
| [Na⁺] (mM) | 72 | 72 | 72 |
| [Cl⁻]/[Na⁺] | 1.30 | 1.50 | 1.70 |
| [NH4Cl] /[NaCl] | 0.5 | 0.6 | 0.7 |
| Salty taste intensity*¹ | 0.62±0.04 | 0.71±0.07 | 0.78±0.04 |
| Salty taste enhancement ratio*² | 1.49 | 1.69 | 1. 86 |
| Unintended taste*³ | 1.40 | 1.40 | 1. 70 |

| | | | |
|---|---|---|---|
| ^{*1} The salty taste intensity is shown as a concentration (w/v%) of sodium chloride in a corresponding standard solution and is expressed as mean ± standard deviation. ^{*2} The salty taste enhancement ratio represents a ratio obtained by dividing a mean of the salty taste intensity of each sample by the concentration of sodium chloride aqueous solution comprising 72 mM sodium ions (0.42%). ^{*3} The unintended taste is shown as a mean. | | | |

As demonstrated in Tables 10, 12, 14, 16, 18, and 20, a very high correlation between a molar ratio of chloride ions/sodium ions and salty taste enhancement ratio was observed in the taste composition comprising a sodium salt of an organic acid. A similar test was performed using Examples 8-1 to 8-3 in which trisodium citrate in Examples 1-1, 1-3, and 1-5 in Experimental Example 1 was replaced with trisodium phosphate to examine whether this very high correlation can be generalized to a taste composition obtained using a sodium salt of an inorganic acid except for hydrochloric acid. Examples 8-1 to 8-3 were prepared using the following quantity ratios of reagents (Table 21).

**Table 21. Composition of samples comprising trisodium phosphate**

| | Example 8-1 | Example 8-2 | Example 8-3 |
|---|---|---|---|
| ammonium chloride | 31.1%*¹ | 34.7% | 39.1% |
| trisodium phosphate 12 hydrate | 44.2% | 26.1% | 4.1% |
| table salt | 24.7% | 39.3% | 56.8% |
| Total | 100.0% | 100.0% | 100.0% |
| Sodium content*² | 23.7% | 23.7% | 23.6% |
| pH*³ | 8.54 | 7.96 | 7.28 |

| | | | |
|---|---|---|---|
| ^{*1} Contents of each component used for sample preparation in reagent mixtures are expressed in wt%. ^{*2} Sodium contents (wt%) in reagent mixtures were calculated based on the weight of anhydrous salts. ^{*3} A pH of a solution in which each sample is dissolved at 1% (w/v) in purified water is expressed. | | | |

The results of sensory evaluation of Examples 8-1 to 8-3 are shown (Table 22). Consequently, Pearson's correlation coefficient between the molar ratio of chloride ions/sodium ions and salty taste enhancement ratio was 0.991, demonstrating a very high correlation between them even when a sodium salt of phosphoric acid which is an inorganic acid is used.

**Table 22. Evaluation of the taste of a taste composition comprising trisodium phosphate (n = 7)**

| | Example 8-1 | Example 8-2 | Example 8-3 |
|---|---|---|---|
| ammonium chloride (mM) | 54. 4 | 53. 3 | 52. 3 |
| trisodium phosphate (mM) | 10. 9 | 5.6 | 0.8 |
| sodium chloride (mM) | 39. 5 | 55. 3 | 69. 6 |
| [Na⁺] (mM) | 72 | 72 | 72 |
| [Cl⁻]/[Na⁺] | 1. 30 | 1.50 | 1. 70 |
| [NH4Cl]/[NaCl] | 1. 4 | 1.0 | 0.8 |
| Salty taste intensity*¹ | 0.69±0.09 | 0.80±0.09 | 0.87±0.10 |
| Salty taste enhancement ratio*² | 1. 63 | 1. 90 | 2. 07 |
| Unintended taste*³ | 1. 43 | 1.43 | 1.43 |

| | | | |
|---|---|---|---|
| ^{*1} The salty taste intensity is shown as a concentration (w/v%) of sodium chloride in a corresponding standard solution and is expressed as mean ± standard deviation. ^{*2} The salty taste enhancement ratio represents a ratio obtained by dividing a mean of the salty taste intensity of each sample by the concentration of sodium chloride aqueous solution comprising 72 mM sodium ions (0.42%). ^{*3} The unintended taste is shown as a mean. | | | |

Similar to the taste composition comprising trisodium citrate, a very high correlation between the molar ratio of chloride ions/sodium ions and salty taste enhancement ratio was also observed regardless of types of the examined organic acids or inorganic acids. Therefore, it is demonstrated that the salty taste intensity can be systematically increased while controlling sodium content by optimizing the quantity ratio of each component based on the molar ratio of chloride ions/sodium ions. Notably, the salty taste enhancement ratio of the taste composition having the same molar ratio of chloride ions/sodium ions was at similar levels regardless of which organic acid or inorganic acid was used (Tables 10, 12, 14, 16, 18, 20, and 22). In many cases, the sour taste as an unintended taste was subtle or at most tolerable, but in some samples unintended tastes became stronger as the amount of a sodium salt of an organic acid increased. In particular, when the amount of sodium DL-malate increased (Example 3-1 in Table 12), the sour taste as an unintended taste got stronger. Furthermore, Examples 6-1 to 6-3 comprising sodium L-glutamate, which is also known as an umami tastant, showed pleasant umami as an unintended taste. This taste composition would be preferred for an application to foods or beverages exhibiting an umami taste and salty taste such as Japanese broth.

5.3 Experimental Example 3: The Taste Composition of the Present Invention has Higher Salty Taste Intensity and Less Unintended Taste than Commercially Available Salt-Reduced Seasonings

The salty taste intensity and unintended taste of the taste composition of the invention were compared to table salt and commercially available salty taste seasonings. Example 9 was obtained by dissolving reagents of the same quantity ratio as Example 1-3 (Table 3) in purified water so that sodium concentration was adjusted to 120 mM (Table 23). The salty taste intensity and unintended taste of Example 9 was compared to the taste of table salt (Comparative Examples 1 and 2), commercially available sea salt (raw materials/sun-dried sea salt (93%; Mexico or Australia) and seawater (7%; Japan); ingredients/Sodium chloride 95.5%, magnesium 0.1-0.2%, calcium 0.05-0.2%, and potassium 0.01-0.15%) (Comparative Example 3), commercially available high potassium-containing salt-reduced seasoning A (raw materials/seawater (Japan), seasonings (inorganic salts, etc.) (53%), magnesium carbonate (1%), calcium glutamate, and polyglutamic acid; ingredients/sodium chloride 46.0%, potassium 27.3%, and magnesium 0.22%) (Comparative Example 4), commercially available lemon-containing salt-reduced seasoning (raw materials/lactose (made in USA), common salt, lemon powder, protein hydrolyzate, citric acid, fine silicon dioxide, and seasonings (amino acids, etc.); ingredients (in 100 g)/protein 0.3 g, carbohydrate 54.1 g, salt equivalent 44.9 g, potassium 32.7 mg, magnesium 1.7 mg, and phosphorus 8 mg) (Comparative Example 5), commercially available high potassium-containing salt-reduced seasoning B (raw materials/seawater (Setouchi), potassium chloride (50%), tricalcium phosphate (1.5%), and citric acid; ingredients (in 100 g)/Carbohydrate 0.7 g, salt equivalent 48.0 g, and potassium 26200 mg) (Comparative Example 6), commercially available potassium- and iodine-containing salt-reduced seasoning A (raw materials/sodium chloride, potassium chloride, magnesium sulfate, lysine hydrochloride, silicon dioxide, and potassium iodide; ingredients (in 100 g)/sodium 22400 mg, potassium 11680 mg, and magnesium 1109 mg) (Comparative Example 7) or commercially available potassium- and iodine-containing salt-reduced seasoning B (raw materials/common salt, potassium chloride, calcium silicate, magnesium carbonate, dextrose, and potassium iodide; ingredients (in 1.4 g)/sodium 290 mg, potassium 350 mg, and iodine 60 µg)

### (Comparative Example 8).

**Table 23. Composition of the taste composition of the invention used in comparative study of the salty taste intensity**

| | Example 9 |
|---|---|
| **ammonium** chloride (mM) | 77.6 |
| trisodium citrate (mM) | 5.8 |
| sodium chloride (mM) | 102.9 |
| [Na⁺] (mM) | 120 |
| [Cl⁻]/[Na⁺] | 1.50 |
| [NH4Cl]/[NaCl] | 0.8 |

The taste of each sample was assessed by analytical sensory evaluation. In particular, the salty taste intensity was assessed by ranking test and the unintended taste was assessed by rating test as in Experimental Examples 1 and 2. In this study, each panelist compared the salty taste intensity of each sample and assigned a rank to each sample in descending order of the salty taste intensity. The results are shown in Tables 24 and 25. Regarding the mean ranks of the salty taste intensity of each sample in which sodium concentration was adjusted to 120 mM or 154 mM based on the ingredient label of each product, Example 9 had the highest mean rank.

**Table 24. Comparison of the salty taste intensity between the taste composition of the invention and conventional products: 1 (n = 6)**

| Sample | [Na] (mM) | Salty taste intensity (mean rank) | Unintended taste *¹ |
|---|---|---|---|
| Comparative Example 1 | 120 | 4.7 | 0.17 |
| Comparative Example 2 | 154 | 2.8 | 0.17 |
| Comparative Example 3 | 120 | 4.3 | 0.00 |
| Comparative Example4 | 120 | 2.0 | 2.17 |
| Example 9 | 120 | 1.2 | 1.50 |

| | | | |
|---|---|---|---|
| *¹ The unintended taste is shown as a mean. | | | |

**Table 25. Comparison of the salty taste intensity between the taste composition of the invention and conventional products: 2 (n = 8)**

| Sample | [Na] (mM) | Salty taste intensity (mean rank) | Unintended taste *¹ |
|---|---|---|---|
| Comparative Example 1 | 120 | 4. 8 | 0. 13 |
| Comparative Example 2 | 154 | 3. 6 | 0.13 |
| Comparative Example 5 | 120 | 7. 0 | 3.63 |
| Comparative Example 6 | 120 | 2. 4 | 2.25 |
| Comparative Example 7 | 120 | 5. 9 | 2.63 |
| Comparative Example 8 | 120 | 3. 1 | 2.50 |
| Example 9 | 120 | 1. 1 | 1.50 |

| | | | |
|---|---|---|---|
| ^{*1} The unintended taste is shown as a mean. | | | |

Furthermore, the sour taste of Example 9 as an unintended taste was at a minimal level and substantially lower than the unintended taste of Comparative Example 4 (remaining acrid taste), Comparative Example 5 (lemon-like sour taste), Comparative Example 6 (remaining acrid taste), Comparative Example 7 (remaining acrid taste and unique iodic flavor), and Comparative Example 8 (remaining acrid taste and unique iodic flavor) (Tables 24 and 25). Similar results were also obtained in a comparative study in which concentrations (w/v%) of the samples were made equivalent (Table 26). In Table 26, Example 10 was obtained by dissolving reagents in the same quantity ratio as Example 1-3 (Table 3) in purified water so as to adjust the concentration to 0.7% (w/v).

**Table 26. Comparison of the salty taste intensity between the taste composition of the invention and conventional products: 3 (n = 8)**

| Sample | % (w/v) | Salty taste intensity (mean rank) | Unintended taste *¹ |
|---|---|---|---|
| Comparative Example 1 | 0.7 | 3.4 | 0.06 |
| Comparative Example 2 | 0.9 | 1.3 | 0.13 |
| Comparative Example 3 | 0.7 | 3.4 | 0.13 |
| Comparative Example 4 | 0.7 | 7.5 | 2.25 |
| Comparative Example 5 | 0.7 | 8.9 | 3.69 |
| Comparative Example 6 | 0.7 | 6.3 | 2.44 |
| Comparative Example 7 | 0.7 | 6.3 | 2.69 |
| Comparative Example 8 | 0.7 | 6.0 | 2.25 |
| Example 10 | 0.7 | 1.3 | 1.31 |

| | | | |
|---|---|---|---|
| ^{*1} The unintended taste is shown as a mean. | | | |

Thus, the taste composition of the invention has the highest salty taste intensity at a concentration containing the same amount of sodium compared to commercially available salty taste seasonings. Furthermore, the taste composition of the invention exhibited much lower unintended taste than well-known salt-reduced seasonings. Therefore, it is demonstrated that the taste composition of the invention is superior to any currently commercially available seasonings as salt-reduced seasoning to reduce sodium intake without compromising the joy of eating.

### 5.4 Experimental Example 4: Application of the Taste Composition of the Present Invention; Instant Pickles Seasoning

As an exemplary use of the taste composition of the invention, its application to instant pickles seasoning is demonstrated. Instant pickles seasoning was prepared by dissolving 108.0 g of table salt, 49.7 g of 50% sodium lactate, and 67.2 g of ammonium chloride in tap water in a plastic bottle and filling up to 1 L (Example 11). A control instant pickles seasoning was prepared by dissolving 200.0 g of table salt in tap water and filling up to 1 L (Comparative Example 9). The composition of each sample is shown in Table 27.

**Table 27. Composition of salt-reduced instant pickles seasoning of the present invention and control sample**

| | Example 11 | Comparative Example 9 |
|---|---|---|
| ammonium chloride | 6. 7%*¹ | 0. 0% |
| sodium lactate | 2.5% | 0. 0% |
| table salt | 10. 8% | 20. 0% |
| [Na⁺] (M) | 2. 1 | 3. 4 |
| [Cl⁻] / [Na⁺] | 1. 50 | 1. 00 |
| [NH4Cl]/[NaCl] | 0. 7 | 0. 0 |

| | | |
|---|---|---|
| ^{*1} Contents of each component used for sample preparation in solutions are expressed in w/v%. | | |

200 g of cucumber sliced to about 5 mm thick was put in each of two transparent plastic bags with zippers. 20 g of Example 11 or Comparative Example 9 was added to each of these bags. After closing the zippers, the plastic bags were kneaded thoroughly by hand to mix the contents evenly. The instant pickles seasoning was allowed to penetrate the cucumber by storing it in a refrigerator for two hours and an instant pickles of cucumber was obtained.

The taste of the instant pickles obtained using each sample was assessed by a two-point discrimination test of analytical sensory evaluation. In this study, each panelist compared the salty taste intensity of each sample and determined which one had a higher salty taste intensity than the other. When there was no difference in the salty taste intensity between the two samples, each panelist determined it as such. The results are shown in Table 28. In addition, all panelists determined that there was no difference in the taste other than the salty taste between the two samples.

**Table 28. Comparison of the salty taste intensity between salt-reduced instant pickles of the invention and control (n = 5).**

| | number of panelists |
|---|---|
| The salty taste of Example 11 is stronger | 3 |
| The salty taste of Comparative Example 9 is stronger | 1 |
| There is no difference in salty taste intensity between two samples | 1 |

A binomial test was performed to test a statistically significant difference in the salty taste intensity between Example 11 and Comparative Example 9. The result was p = 0.671 > 0.05, and thus no significant difference was observed between the two. However, it is demonstrated that Example 11 clearly holds a prominent position in terms of numerical value. Therefore, this data demonstrated that Example 11 exhibited the same salty taste intensity as a control prepared using only table salt despite a 40% decrease in sodium content and that Example 11 did not impart any unintended taste other than the salty taste.

### 5.5 Experimental Example 5; Application of the Taste Composition of the Present Invention; Mayonnaise

As an exemplary use of the taste composition of the invention, an application to mayonnaise is demonstrated. 60 g of egg yolk, 5.1 g of table salt, 3.6 g of ammonium chloride, 2.2 g of sodium acetate trihydrate, 50 g of grain vinegar (Mizkan Co., Ltd.), and 30g of tap water were mixed in a polyethylene beaker to give an aqueous phase of mayonnaise. This aqueous phase was pre-mixed by thoroughly agitating at a low speed of about 2000 rpm with a homo mixer (MARK II Model 2.5; PRIMIX). 350 g of Nisshin salad oil (The Nisshin OilliO Group, Ltd.) was added little by little to the resultant mixture while agitating thoroughly at 4000 to 5000 rpm to give an emulsion. After the addition of all the salad oil, emulsion particles were made finer and stabilized by agitating thoroughly at an increased rotating speed of homo mixer of 8000 rpm to give salt-reduced mayonnaise (Example 12). A control mayonnaise was prepared by the same method except for replacing ammonium chloride and sodium acetate trihydrate of Example 12 with table salt (Comparative Example 10). The composition of each sample is shown in Table 29. Here, a molar ratio of potassium ions/sodium ions in Example 12 and Comparative Example 10 was calculated from potassium contents of each material obtained from an analytical table of food ingredients ("Analytical Table of Food Ingredients in Japan, 2023, eighth revision", Ed. Ishiyaku Publishers)

**Table 29. Composition of salt-reduced mayonnaise of the invention and a control sample**

| | Example 12 | Comparative Example 10 |
|---|---|---|
| ammonium chloride | 0. 7%*¹ | 0.0% |
| sodium acetate | 0. 3% | 0. 0% |
| table salt | 1. 0% | 2. 0% |
| egg yolk | 12.0% | 12. 0% |
| grain vinegar | 10. 0% | 10. 0% |
| salad oil | 70. 0% | 70. 0% |
| [Na⁺] (mM) | 206 | 342 |
| [Cl⁻]/[Na⁺] | 1.5 | 1.0 |
| [NH4Cl]/[NaCl] | 0.8 | 0.0 |
| [K⁺]/[Na⁺] | 0.017 | 0.011 |

| | | |
|---|---|---|
| ^{*1} Contents of each component used for sample preparation in solutions are expressed in w/v%. | | |

The taste of each sample was assessed by a two-point discrimination test of analytical sensory evaluation. In this study, each panelist compared the salty taste intensity of each sample and determined which one had a higher salty taste intensity than the other. When there was no difference in the salty taste intensity between the two samples, each panelist determined it as such. The results are shown in Table 30. In addition, all panelists determined that there was no difference in the taste other than the salty taste between the two samples.

**Table 30. Comparison of the salty taste intensity between salt-reduced mayonnaise of the invention and control (n = 7).**

| | number of panelists |
|---|---|
| The salty taste of Example 12 is stronger | 4 |
| The salty taste of Comparative Example 10 is stronger | 0 |
| There is no difference in salty taste intensity between two samples | 3 |

A binomial test was performed to test a statistically significant difference in the salty taste intensity between Example 12 and Comparative Example 10. The result was p = 0.232 > 0.05, and thus no significant difference was observed between the two. However, it is demonstrated that Example 12 clearly holds a prominent position in terms of numerical value. Therefore, it was demonstrated that Example 12 exhibited the same salty taste intensity as a control prepared using only table salt despite a 40% decrease in sodium content and that Example 12 did not impart any unintended taste other than the salty taste. Taken together with the results of Experimental Example 4 in which no unintended taste was observed as well, it was suggested that the unintended taste of the taste composition of the invention in salt-reduced seasoning or salt-reduced foods or beverages got still lower or negligible due to an interaction of taste among food ingredients (Keast R. and Breslin P., An overview of binary taste-taste interactions, Food Quality and Preference 2003; 14(2), pp.111-124).

### 5.6 Experimental Example 6; Further Product Development

Experimental Examples 1 to 5 focused on the taste composition or salt-reduced seasoning comprising one sodium salt of an organic acid or inorganic acid except for hydrochloric acid per sample (Examples 1-1 to 12), and some samples showed an increase in the unintended taste as an anion of an organic acid increased. So the present inventors tested whether the unintended taste associated with an increase in concentrations of particular anions of an organic acid or an inorganic acid could be controlled by combining small amounts of a plurality of sodium salts of organic acids and/or inorganic acids to adjust a molar ratio of chloride ions/sodium ions to a given ratio. To this end, the salty taste intensity and unintended taste of Examples 13-1 to 13-3 in which sodium salts of five organic acids were combined were assessed in the same way as in Experimental Examples 1 and 2.

Examples 13-1 to 13-3 were prepared using the following quantity ratios of reagents (Table 31).

**Table 31. Composition of a sample comprising sodium salts of five organic acids**

| | Example 13-1 | Example 13-2 | **Example** 13-3 |
|---|---|---|---|
| ammonium chloride | 25.7%*¹ | 32.3% | 39.0% |
| trisodium citrate dihydrate | 5.9% | 3.1% | 0.4% |
| sodium DL-malate 0.8 hydrate | 3.8% | 2.0% | 0.3% |
| sodium gluconate | 4.3% | 2.3% | 0.3% |
| sodium L-aspartate monohydrate | 3.4% | 1.8% | 0.2% |
| disodium 5'-adenylate 1.8 hydrate | 8.4% | 4.5% | 0.5% |
| table salt | 48.4% | 53.9% | 59.3% |
| Total | 100.0% | 100.0% | 100.0% |
| Sodium content *² | 23.6% | 23.6% | 23.6% |
| pH*³ | 6.91 | 6.74 | 6.33 |

| | | | |
|---|---|---|---|
| ^{*1} Contents of each component used for sample preparation in reagent mixtures are expressed in wt%. ^{*2} Sodium contents (wt%) in reagent mixtures were calculated based on the weight of anhydrous salts. ^{*3} A pH of a solution in which each sample is dissolved at 1% (w/v) in purified water is expressed. | | | |

The results of sensory evaluation of Examples 13-1 to 13-3 are shown (Table 32). Consequently, the observed unintended taste was at a low level and subtle compared to the taste composition prepared using a sodium salt of an organic acid alone (see Experimental Examples 1 and 2). Furthermore, Pearson's correlation coefficient between the molar ratio of chloride ions/sodium ions and salty taste enhancement ratio was 0.979, demonstrating a very high correlation between them.

**Table 32. Evaluation of the taste of a taste composition comprising sodium salts of five organic acids (n = 6)**

| | Example 13-1 | Example 13-2 | Example 13-3 |
|---|---|---|---|
| ammonium chloride (mM) | 34.4 | 42.6 | 51.0 |
| trisodium citrate (mM) | 1.4 | 0.8 | 0.1 |
| sodium DL-malate (mM) | 1.4 | 0.8 | 0.1 |
| sodium gluconate (mM) | 1.4 | 0.8 | 0.1 |
| sodium L-aspartate (mM) | 1.4 | 0.8 | 0. 1 |
| disodium 5'-adenylate (mM) | 1.4 | 0.8 | 0. 1 |
| sodium chloride (mM) | 59. 2 | 65. 2 | 71. 2 |
| [Na⁺] (mM) | 72 | 72 | 72 |
| [Cl⁻]/[Na⁺] | 1.30 | 1. 50 | 1. 70 |
| [NH4Cl]/[NaCl] | 0.6 | 0.7 | 0. 7 |
| Salty taste intensity *¹ | 0. 65±0. 08 | 0. 78±0. 12 | 0. 83±0. 10 |
| Salty taste enhancement ratio^{*2} | 1. 55 | 1.85 | 1. 98 |
| Unintended taste^{*3} | 1. 50 | 1. 33 | 1. 50 |

| | | | |
|---|---|---|---|
| ^{*1} The salty taste intensity is shown as a concentration (w/v%) of sodium chloride in a corresponding standard solution and is expressed as mean ± standard deviation. ^{*2} The salty taste enhancement ratio represents a ratio obtained by dividing a mean of the salty taste intensity of each sample by the concentration of sodium chloride aqueous solution comprising 72 mM sodium ions (0.42%). ^{*3} The unintended taste is shown as a mean. | | | |

As shown above, the effectiveness of the taste composition of the invention can be increased not only by using a sodium salt of an organic acid or inorganic acid except for hydrochloric acid alone but also by optimizing a composition of a combination of one or more sodium salts of an organic acid and/or one or more sodium salts of an inorganic acid except for hydrochloric acid.

Many modifications and variations of this invention can be made without departing from its spirit and scope, as will be apparent to those skilled in the art. The specific embodiments described herein are offered by way of example only, and the invention is to be limited only by the terms of the appended claims, along with the full scope of equivalents to which such claims are entitled.

## Claims

1. A taste composition for enhancing a salty taste of foods or beverages, comprising:
ammonium chloride;
one or more sodium salts of an organic acid and/or one or more sodium salts of an inorganic acid except for hydrochloric acid; and
sodium chloride,
wherein a molar ratio of chloride ions/sodium ions is about 1.30 to about 2.30.

2. The taste composition according to claim 1, wherein a molar ratio of ammonium chloride/sodium chloride is about 0.4 to about 6.0.

3. The taste composition according to claim 1, wherein the one or more sodium salts of the organic acid are selected from the group consisting of a sodium salt of a carboxylic acid, amino acid, nucleotide, and vitamin or vitamin derivative.

4. The taste composition according to claim 3, wherein the carboxylic acid is a monovalent carboxylic acid.

5. The taste composition according to claim 3, wherein the carboxylic acid is a divalent carboxylic acid.

6. The taste composition according to claim 3, wherein the carboxylic acid is a trivalent carboxylic acid.

7. The taste composition according to claim 4, wherein the monovalent carboxylic acid is selected from the group consisting of acetic acid, propionic acid, lactic acid, oleic acid, stearoyl lactic acid, benzoic acid, and gluconic acid.

8. The taste composition according to claim 5, wherein the divalent carboxylic acid is selected from the group consisting of succinic acid, fumaric acid, malic acid, tartaric acid, and norbixin.

9. The taste composition according to claim 6, wherein the trivalent carboxylic acid is citric acid.

10. The taste composition according to claim 3, wherein the amino acid is selected from the group consisting of aspartic acid and glutamic acid.

11. The taste composition according to claim 3, wherein the nucleotide is selected from the group consisting of 5'-adenylic acid, 5'-guanylic acid, 5'-cytidylic acid, 5'-uridylic acid, and 5'-inosinic acid.

12. The taste composition according to claim 3, wherein the vitamin or vitamin derivative is selected from the group consisting of pantothenic acid, L-ascorbic acid, and erythorbic acid.

13. The taste composition according to claim 1, wherein the one or more sodium salts of an inorganic acid except for hydrochloric acid are selected from the group consisting of a sodium salt of a phosphorus-containing inorganic acid, sulfur-containing inorganic acid, nitrogen-containing inorganic acid, and selenium-containing inorganic acid.

14. The taste composition according to claim 13, wherein the phosphorus-containing inorganic acid is selected from the group consisting of phosphoric acid, pyrophosphoric acid, metaphosphoric acid, and polyphosphoric acid.

15. The taste composition according to claim 13, wherein the sulfur-containing inorganic acid is selected from the group consisting of sulfuric acid, sulfurous acid, and pyrosulfurous acid.

16. The taste composition according to claim 13, wherein the nitrogen-containing inorganic acid is selected from the group consisting of nitric acid and nitrous acid.

17. The taste composition according to claim 13, wherein the selenium-containing inorganic acid is selenious acid.

18. The taste composition according to claim 1, wherein the taste composition is solid and comprises about 10 wt% to about 30 wt% of sodium ions.

19. The taste composition according to claim 18, wherein the taste composition is used as an alternative to table salt.

20. The taste composition according to claim 1, wherein the taste composition is liquid and comprises about 40 mM to about 3.0 M of sodium ion.

21. The taste composition according to claim 20, wherein the taste composition has a pH of about 5.5 to about 8.6.

22. Salt-reduced seasoning comprising the taste composition according to any one of claims 1 to 21 in an amount of about 0.5 wt% to about 95 wt% instead of table salt, wherein the molar ratio of chloride ions/sodium ions is about 1.30 to about 2.10.

23. The salt-reduced seasoning according to claim 22, wherein the salt-reduced seasoning is liquid or pasty and wherein the molar ratio of chloride ions/sodium ions is about 1.46 to about 2.10.

24. The salt-reduced seasoning according to claim 23, wherein a molar ratio of potassium ions/sodium ions is 0 to about 0.080.

25. The salt-reduced seasoning according to claim 22, wherein the salt-reduced seasoning is selected from the group consisting of soy sauce, ponzu sauce, miso, noodle soup base, cooking sake, sweet cooking rice wine, sauce, broth, dressing, mayonnaise, tomato ketchup, Worcestershire sauce, pork cutlet sauce, instant pickles seasoning, chili bean sauce, gochujang, weiper, shantung, oyster sauce, chicken stock, spice, and combined seasonings.

26. Salt-reduced foods or beverages comprising the taste composition according to any one of claims 1 to 21 in an amount of about 0.01 wt% to about 50 wt% instead of table salt, wherein the molar ratio of chloride ions/sodium ions is about 1.30 to about 2.10.

27. The salt-reduced foods or beverages according to claim 26, wherein the salt-reduced foods or beverages are liquid and wherein the molar ratio of chloride ions/sodium ions is about 1.46 to about 2.10.

28. The salt-reduced foods or beverages according to claim 27, wherein a molar ratio of potassium ions/sodium ions is 0 to about 0.080.

29. The salt-reduced foods or beverages according to claim 26, wherein the salt-reduced foods or beverages are selected from the group consisting of curry roux, stew roux, hashed beef roux, sauce such as pasta sauce, demi-glace sauce, white sauce, gratin sauce, hamburger steak sauce, or pizza sauce, soup such as ramen soup or hot pot soup, instant foods such as instant noodle, miso soup or soup, retort foods such as curry, stew, soup or rice bowl seasonings, frozen food, freeze dried foods, deli seasonings, seasoned rice base, sushi base, Furikake, seasoning for Ochazuke, canning, canned beef, bottling, deli bread, pizza, Japanese pickles, salted plum, food boiled in soy sauce, salted fish, processed seaweed products such as salted kelp, cheese, raw ham, smoked meat such as ham, bacon, sausage, beef jerky, karpas, or salami, seasoned meat for yakiniku, steamed chicken, char siu, seasoned fish such as salt-grilled fish, Saikyozuke, mirin marinated fish pickles, fish cooked in miso, Teriyaki, Kabayaki, or pickled fish, salted salmon roe, spicy pollack roe, dried young sardines, dried fish, fish paste product such as Chikuwa, Kamaboko, Hanpen, Satsuma-age, or imitation crab meat, appetizers such as dry foods or nuts, snacks, Japanese confectionery, rice crackers, soft drinks, kelp tea, cooked food, delicatessen, confectionery, pet food and combination thereof.

30. The salt-reduced foods or beverages according to claim 26, wherein the salt-reduced foods or beverages exhibit an enhanced salty taste by about 40% to about 170%, further, about 45% to about 150%, or, even further, about 50% to about 110% compared to foods or beverages to which the taste composition is not added and which comprise the same amount of sodium ions.

31. A method for producing salt-reduced seasoning, comprising adding the taste composition according to any one of claims 1 to 21 to seasoning materials.

32. A method for producing salt-reduced foods or beverages, comprising adding the taste composition according to any one of claims 1 to 21 to food or beverage materials.

33. A method for enhancing the salty taste of foods or beverages, comprising adding the taste composition according to any one of claims 1 to 21 to food or beverage materials.

34. The taste composition according to any one of claims 1 to 21, wherein the taste composition further comprises one or more additives which are selected from the group consisting of emulsifying agent, gelling agent, polysaccharide thickener, flavoring agent, coloring agent, preservative, antioxidant, stabilizing agent, and pH adjuster.

35. The taste composition according to any one of claims 1 to 21, wherein the taste composition is for a subject having cardiovascular disease or renal dysfunction.

36. The taste composition according to any one of claims 1 to 21, wherein the taste composition is for a subject having hypertension or prehypertension.

37. The taste composition according to any one of claims 1 to 21, wherein the taste composition is for a healthy subject.
